(19) Europäisches Patentamt
European Patent Office
Office européen des brevets

(11) EP 4 144 911 A1

(12) **EUROPEAN PATENT APPLICATION**
published in accordance with Art. 153(4) EPC

(43) Date of publication:
**08.03.2023 Bulletin 2023/10**

(21) Application number: **21795885.9**

(22) Date of filing: **23.04.2021**

(51) International Patent Classification (IPC):
***D06M 15/693*** *(2006.01)* ***B60C 9/00*** *(2006.01)*
***C09J 11/06*** *(2006.01)* ***C09J 11/08*** *(2006.01)*
***C09J 109/00*** *(2006.01)* ***C09J 175/04*** *(2006.01)*
***D06M 13/11*** *(2006.01)* ***D06M 13/395*** *(2006.01)*
***D06M 15/15*** *(2006.01)*

(52) Cooperative Patent Classification (CPC):
**B60C 9/00; C09J 11/06; C09J 11/08; C09J 109/00; C09J 175/04; D06M 13/11; D06M 13/395; D06M 15/15; D06M 15/693**

(86) International application number:
**PCT/JP2021/016534**

(87) International publication number:
**WO 2021/220989 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2020 JP 2020080674**

(71) Applicant: **BRIDGESTONE CORPORATION**
**Chuo-ku**
**Tokyo 104-8340 (JP)**

(72) Inventor: **NAKAMURA, Masaaki**
**Tokyo 104-8340 (JP)**

(74) Representative: **Marks & Clerk LLP**
**15 Fetter Lane**
**London EC4A 1BW (GB)**

(54) **ADHESIVE COMPOSITION FOR ORGANIC FIBER CORDS, ORGANIC FIBER CORD-RUBBER COMPOSITE BODY, AND TIRE**

(57) Provided is an adhesive composition for organic fiber cords containing (A) synthetic rubber latex having unsaturated diene, (B) gelatin, and (C) an aqueous compound having a (thermal dissociative blocked) isocyanate group and containing no resorcin or formaldehyde, which has the following effects: (1) causing little damage to the environment by using no resorcin or formaldehyde, (2) in a process of coating an organic fiber cord with the adhesive composition for organic fiber cords and drying and heat curing, it is possible to suppress the adhesion of the adhesive composition for organic fiber cords to a roller or the like, thereby achieving good operability, and (3) achieving good adhesion between an organic fiber cord and a coated rubber composition.

FIG. 3

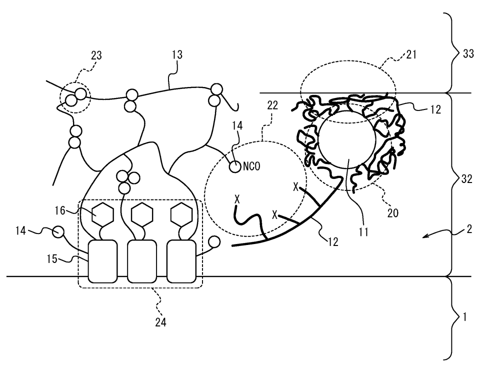


EP 4 144 911 A1

## Description

TECHNICAL FIELD

This disclosure relates to an adhesive composition for organic fiber cords containing no resorcin or formaldehyde, an organic fiber cord-rubber composite using an organic fiber cord coated with the adhesive composition for organic fiber cords, and a tire using the organic fiber cord-rubber composite.

BACKGROUND

To strengthen a rubber article such as a tire, an organic fiber cord such as a tire cord made of polyester fiber or the like and a rubber composition for tires are adhered to form an organic fiber cord-rubber composite. A method of coating an organic fiber cord with an adhesive composition for organic fiber cords, and co-vulcanizing the adhesive composition for organic fiber cords with a rubber composition for tires is widely used for the adhesion.

When an organic fiber cord is coated with the adhesive composition for organic fiber cords, particularly when the adhesive composition for organic fiber cords is applied by dipping, it is necessary to reduce the viscosity of the adhesive composition for organic fiber cords until it can be applied by dipping. Since a solvent for adjusting the viscosity of the adhesive composition for organic fiber cords volatilizes in the coating process, it is preferable to use water, which causes little damage to the environment, as the solvent

In general, an aqueous adhesive composition having water-based properties (which can be dissolved or dispersed in water) needs to contain a compound having a polar molecular structure as a component. On the other hand, the polarity of a polymer material such as rubber and an organic fiber cord base material as an adherend is low, and the difference between the polarity of its surface and the polarity of the component contained in the adhesive composition for organic fiber cords is large, rendering the adhesion difficult. Therefore, to use the aqueous adhesive composition as an adhesive composition for organic fiber cords, the component contained in the aqueous adhesive composition needs to have polarity because of its water-based properties, and, on the other hand, it is also necessary to control the polarity so that the adhesiveness does not deteriorate due to a difference from the polarity of the adherend. That is, it is preferable to use an aqueous adhesive composition for organic fiber cords having a function that balances these conflicts.

FIG. 1 is used to explain an example of the process of coating the organic fiber cord with the adhesive composition for organic fiber cords, where the organic fiber cord is immersed in an adhesive composition for organic fiber cords.

An organic fiber cord 1 is unwound and runs into a dipping bath (dipping tank) 3 containing an adhesive composition 2 for organic fiber cords, and the organic fiber cord 1 is immersed in the adhesive composition 2 for organic fiber cords. Next, an organic fiber cord 4 coated with the adhesive composition 2 for organic fiber cords is withdrawn from the dipping bath (dipping tank) 3, and drawing rollers 5 remove the excess adhesive composition 2 for organic fiber cords. Further, the organic fiber cord 4 coated with the adhesive composition 2 for organic fiber cords is subjected to, while being carried by rollers, drying in a drying zone 6, heat curing of the resin with tension applied to stretch the cord in a hot zone 7, heat curing of the resin with the tension accurately adjusted and normalized so as to achieve desired high elongation physical properties in a normalizing zone 8, and air-cooling outside the zones. Finally, the organic fiber cord 4 coated with the adhesive composition 2 for organic fiber cords is wound up. In this way, the organic fiber cord is coated with the adhesive composition for organic fiber cords.

Conventionally, a RFL (resorcin-formalin-latex) adhesive composition obtained by aging a mixed solution containing resorcin, formalin and rubber latex, or an adhesive composition obtained by mixing a specific adhesion promoter with the RFL adhesive composition has been used as the adhesive composition for organic fiber cords (see US 2126229 B (PTL 1), JP 2005-263887 A (PTL 2), JP 2006-37251 A (PTL 3), and JP H09-12997 A (PTL 4)).

As is well known, in the rubber industry, it has been found that an adhesive composition containing an aqueous phenolic resin obtained by mixing and aging a water-dispersible rubber latex component and water-soluble resorcin and formalin (PTL 1) has a function of achieving both water-based properties and adhesiveness to the surface of a base material with low polarity such as rubber and an organic fiber cord material as an adherend, and the adhesive composition is widely used worldwide. In the RFL adhesive composition, the phenolic resin component containing condensate of resorcin and formaldehyde contained therein has adhesiveness to the organic fiber cord material side, and the rubber latex component contained therein has adhesiveness to the adhered rubber side by co-vulcanization.

The reason why resorcin is preferably used is as follows. Resorcin provides a phenolic condensed resin which is a resin-type one having high adhesiveness to an adherend, and at the same time, it can provide a resin component having high adhesiveness to the organic fiber base material side because a polar functional group introduced into the phenol ring to obtain water solubility is a hydroxyl group with relatively low polarity and less likely to cause steric hindrance.

The RFL adhesive composition is obtained by mixing and aging resorcin, formalin, and rubber latex using rosin acid or the like as an emulsifier for polymerization in the presence of a basic composition. It is presumed that, through this aging, the water-soluble resorcin and formaldehyde form a resol-type resorcin-formaldehyde condensate by a resol-type condensation reaction (PTL 2) under the base, and at the same time, the rosin acid on the surface of the latex is addition-condensed with a methylol group at the terminal of the resol-type resorcin-formaldehyde condensate to enhance the adhesiveness (Koichi Hakata, Network Polymer, Vol. 31, No. 5, p.252, (2010) (NPL 1)).

On the other hand, the latex becomes a protective colloid that is composited with the aqueous resin and encapsulated. As a result, in the treatment of the adhesive composition by the apparatus as illustrated in FIG. 1, the rubber adhesiveness of the latex is suppressed, the stain due to the adhesion of the adhesive composition to the apparatus is reduced, and the RFL adhesive composition can be suitably used.

Further, an aqueous (water-dispersible or water-soluble) adhesion promoter has been added to the RFL adhesive composition to achieve both the water-based properties and the adhesiveness to the surface of a base material with low polarity such as rubber and an organic fiber cord material as an adherend.

(Blocked) isocyanate such as methylene diphenyl diisocyanate with a particle size of 0.01 μm to 0.50 μm (see PTL 3) and water-dispersed particles of water-insoluble phenolic/novolak-type resin such as cresol novolak-type polyfunctional epoxy resin (see PTL 4) and the like have been used as the water-dispersible adhesion promoter.

Further, a sodium hydroxide solution of novolak-type condensate obtained by novolak reaction of resorcin and formaldehyde (see WO 9713818 A1 (PTL 5)), a phenolic resin that dissolve in water in the presence of basic substances such as ammonium solutions of novolak-type condensates of chlorophenols and formaldehyde, or an aqueous urethane compound having a (thermal dissociative blocked) isocyanate group and a self-soluble group (see JP 2011-241402 A (PTL 6)) or the like has been used as the adhesion promoter containing a water-soluble group.

In recent years, however, it has been required to reduce the use of resorcin and formaldehyde, which have been used as water-soluble components in the RFL adhesive composition, from the viewpoint of lowering the burden on the environment.

To respond to the requirement, various adhesive compositions for organic fiber cords containing no resorcin or formaldehyde and using water as a solvent have been studied and proposed.

For example, an adhesive composition containing rubber latex, a blocked isocyanate compound, an epoxide compound, and amino-based compound as a curing agent (see WO 2010125992 A1 (PTL 7)), or an adhesive composition for organic fiber cords containing a urethane resin having a (thermal dissociative blocked) isocyanate group, an epoxide compound, a polymer having an oxazoline group, a basic catalyst having a number average molecular weight of 1,000 to 75,000, and rubber latex (see JP 2013-64037 A (PTL 8)) or the like has been disclosed as an adhesive composition for organic fiber cords containing no resorcin or formaldehyde.

However, when the above-described adhesive compositions for organic fiber cords containing no resorcin or formalin are used, the adhesiveness of the rubber latex, which is measured as the mechanical stability of the adhesive liquid under shear strain, increases. As a result, in the process of coating the organic fiber cord 1 with the adhesive composition 2 for organic fiber cords and drying and heat curing in FIG. 1, for example, much of the adhesive composition 2 for organic fiber cords adheres to the drawing rollers 5 and rollers in the drying zone 6 and the like, causing a new problem of poor operability in the process.

Further, the adhesive composition for organic fiber cords containing no resorcin or formalin as described above has the follows problems:

- there is no cross-linking between the latex component in the coated rubber composition and the condensate of resorcin and formaldehyde in the adhesive composition for organic fiber cords, so that the adhesiveness is low as compared with conventional RFL adhesive compositions, and
- in the process of coating the organic fiber cord with the adhesive composition for organic fiber cords, the adhesive composition is easily adhered to the apparatus as described above, so that the coated surface of the adhesive composition for organic fiber cords is roughened, and the adhesiveness is lowered.

Furthermore, the adhesive composition for organic fiber cords containing no resorcin or formalin as described above has a problem that

- the cord strength of the organic fiber cord coated with the adhesive composition for organic fiber cords is reduced.

CITATION LIST

Patent Literature

PTL 1: US 2126229 B
PTL 2: JP 2005-263887 A

PTL 3: JP 2006-37251 A
PTL 4: JP H09-12997 A
PTL 5: WO 9713818 A1
PTL 6: JP 2011-241402 A
PTL 7: WO 2010125992 A1
PTL 8: JP 2013-64037 A

Non-patent Literature

NPL 1: Koichi Hakata, Network Polymer, Vol. 31, No. 5, p.252, (2010)

SUMMARY

(Technical Problem)

It could thus be helpful to provide an adhesive composition for organic fiber cords having the following effects:

(1) causing little damage to the environment by using no resorcin or formaldehyde,
(2) in a process of coating an organic fiber cord with the adhesive composition for organic fiber cords and drying and heat curing, it is possible to suppress the adhesion of the adhesive composition for organic fiber cords to a roller or the like by suppressing the adhesiveness of rubber latex, which is measured as the mechanical stability of the adhesive liquid under shear strain, thereby achieving good operability, and
(3) achieving good adhesion between an organic fiber cord and a coated rubber composition.

It could also be helpful to provide an organic fiber cord-rubber composite using an organic fiber cord coated with the adhesive composition for organic fiber cords, and a tire using the organic fiber cord-rubber composite.

(Solution to Problem)

To solve the above problems, we have conducted extensive research on the composition of an adhesive for organic fiber cords. As a result, we found that an adhesive composition for organic fiber cords containing (A) synthetic rubber latex having unsaturated diene, (B) gelatin, and (C) an aqueous compound having a (thermal dissociative blocked) isocyanate group has the following effects

(1) causing little damage to the environment by using no resorcin or formaldehyde,
(2) in a process of coating an organic fiber cord with the adhesive composition for organic fiber cords and drying and heat curing, it is possible to suppress the adhesion of the adhesive composition for organic fiber cords to a roller or the like by suppressing the adhesiveness of rubber latex, which is measured as the mechanical stability of the adhesive liquid under shear strain, thereby achieving good operability, and
(3) achieving good adhesion between an organic fiber cord and a coated rubber composition,

and that it is an adhesive composition for organic fiber cords that solves the above problems, thereby completing the present disclosure.
An adhesive composition for organic fiber cords of the present disclosure comprises

[1]

(A) synthetic rubber latex having unsaturated diene,
(B) gelatin, and
(C) an aqueous compound having a (thermal dissociative blocked) isocyanate group, wherein

the adhesive composition for organic fiber cords contains no resorcin or formaldehyde.

(Advantageous Effect)

The present disclosure provides an adhesive composition for organic fiber cords having the following effects

(1) causing little damage to the environment by using no resorcin or formaldehyde,

(2) in a process of coating an organic fiber cord with the adhesive composition for organic fiber cords and drying and heat curing, it is possible to suppress the adhesion of the adhesive composition for organic fiber cords to a roller or the like by suppressing the adhesiveness of rubber latex, which is measured as the mechanical stability of the adhesive liquid under shear strain, thereby achieving good operability, and
(3) achieving good adhesion between an organic fiber cord and a coated rubber composition.

The present disclosure also provides an organic fiber cord-rubber composite using an organic fiber cord coated with the adhesive composition for organic fiber cords, and a tire using the organic fiber cord-rubber composite.

BRIEF DESCRIPTION OF THE DRAWINGS

In the accompanying drawings:

FIG. 1 schematically illustrates an example of a process of coating an organic fiber cord with an adhesive composition for organic fiber cords by dipping;
FIG. 2 schematically illustrates an example of the principle where the adhesive composition for organic fiber cords of the present disclosure suppresses the adhesiveness of rubber latex and improves the adhesiveness between an organic fiber cord and a coated rubber composition in an embodiment of the present disclosure using (C-1) a water-dispersible (thermal dissociative blocked) isocyanate compound that is an addition product of polyisocyanate having an aromatic ring and a blocking agent having one or more active hydrogen groups;
FIG. 3 schematically illustrates an example of the principle where the adhesive composition for organic fiber cords of the present disclosure suppresses the adhesiveness of rubber latex and improves the adhesiveness between an organic fiber cord and a coated rubber composition in an embodiment of the present disclosure using (C-2) an aqueous urethane compound having a (thermal dissociative blocked) isocyanate group; and
FIG. 4 schematically illustrates a cross section of an example of the organic fiber cord-rubber composite of the present disclosure in an embodiment of the present disclosure.

DETAILED DESCRIPTION

The following describes embodiments of the present disclosure in detail. These descriptions are for the purpose of exemplifying the present disclosure and do not limit the present disclosure in any way.
In the present specification, the ends of a range are also included in the range unless otherwise specified.
An adhesive composition for organic fiber cords of the present disclosure contains

(A) synthetic rubber latex having unsaturated diene,
(B) gelatin, and
(C) an aqueous compound having a (thermal dissociative blocked) isocyanate group, and

contains no resorcin or formaldehyde.

<Organic fiber cord>

The organic fiber cord of the adhesive composition for organic fiber cords of the present disclosure may be used to supplement the strength of a rubber article such as a tire. When the organic fiber cord is used as a reinforcing material, spun organic fiber yarn is twisted to obtain an organic fiber cord first. Then, the organic fiber cord is embedded in rubber that covers the organic fiber cord using an adhesive composition for organic fiber cords, and vulcanization is performed to adhere them to form an organic fiber cord-rubber composite. The organic fiber cord-rubber composite is used as a reinforcing member of a rubber article such as a tire.
The material of the organic fiber cord is not particularly limited, and it may be a synthetic resin fiber material typified by an aliphatic polyamide fiber cord such as polyester, 6-nylon, 6,6-nylon and 4,6-nylon, a polyketone fiber cord, and an aromatic polyamide fiber cord typified by para-phenylene terephthalamide. Among the above, polyester, 6-nylon, and 6,6-nylon are preferable, and polyester is particularly preferable.
The material of the polyester is a polymer having an ester bond in the main chain, and more specifically, it is one where 80 % or more of the bonding mode of the repeating units in the main chain is an ester bonding mode.
The polyester is not particularly limited, and examples thereof include those obtained by condensation of glycols, such as ethylene glycol, propylene glycol, butylene glycol, methoxypolyethylene glycol and pentaerythritol, and dicarboxylic acids, such as terephthalic acid, isophthalic acid and their dimethyls, by an esterification reaction or a transesterification reaction. The most typical polyester is polyethylene terephthalate.

The organic fiber cord is preferably an organic fiber cord obtained by twisting a plurality of single fiber filaments, particularly for the purpose of reinforcing a rubber article such as a tire article or a conveyor belt. Further, the organic fiber cord is preferably an organic fiber cord obtained by twisting second twisted single fiber filaments and first twisted single fiber filaments. In this case, it is more preferable that the twist constant of the first twist is 1,300 or more and 2,500 or less, and/or the twist constant of the second twist is 900 or more and 1,800 or less.

<(A) Synthetic rubber latex having unsaturated diene>

The "(A) synthetic rubber latex having unsaturated diene" in the adhesive composition for organic fiber cords of the present disclosure is synthetic rubber latex containing unsaturated diene that is vulcanizable with sulfur.

In an embodiment of the present disclosure, an example of the principle of action exhibited by the "(A) synthetic rubber latex having unsaturated diene" contained in the adhesive composition for organic fiber cords of the present disclosure will be described with reference to FIGS. 2 and 3. Synthetic rubber latex 11 having unsaturated diene is a component for adhering an adhesive layer 32 of an adhesive composition 2 for organic fiber cords and a coated rubber composition 33 which is an adherend thereof. The synthetic rubber latex 11 having unsaturated diene is compatible with rubber polymer contained in the coated rubber composition 33 which is the adherend, and the unsaturated diene moiety is co-vulcanized to form a rubber co-vulcanized adhesive 21. As a result, the adhesive composition for organic fiber cords of the present disclosure containing the "(A) synthetic rubber latex having unsaturated diene" obtains
(3) good adhesion between an organic fiber cord and a coated rubber composition.

The (A) synthetic rubber latex having unsaturated diene is not particularly limited, and examples thereof include styrene-butadiene copolymer rubber latex, vinylpyridine-styrene-butadiene copolymer rubber latex, carboxyl group modified styrene-butadiene copolymer rubber latex, nitrile rubber latex, and chloroprene rubber latex. These may be used alone or in combination of two or more.

Among the above, vinylpyridine-styrene-butadiene copolymer rubber latex is preferable. Vinylpyridine-styrene-butadiene copolymer rubber latex is rubber latex that has been widely used in articles such as adhesive compositions for organic fiber cords and tires. It also provides good adhesion between the adhesive layer and the adhered rubber in the adhesive composition for organic fiber cords of the present disclosure, and its advantage of being relatively flexible also allows the organic fiber cord to be deformed without splitting the adhesive layer.

In the adhesive composition for organic fiber cords of the present disclosure, the content of the (A) synthetic rubber latex having unsaturated diene is not particularly limited. The content is preferably 25 % by mass or more. The content is preferably 80 by mass% or less. The reason is as follows. When the content is 25 % by mass or more, it provides more appropriate compatibility between rubber polymers of the adhered rubber composition and the rubber latex contained in the adhesive composition for organic fiber cords, thereby improving the adhesion state of the coated rubber in an organic fiber cord-rubber composite. Further, when the content is 80 % by mass or less, it is possible to relatively secure a certain amount or more of resin component contained as another component in the adhesive composition. As a result, sufficient cohesive failure resistance of the adhesive layer is secured, and fracture inside the adhesive layer is less likely to occur, thereby obtaining sufficient adhesiveness.

The (A) synthetic rubber latex having unsaturated diene can be obtained as follows. After dissolving an emulsifier such as potassium rosin in water, the monomer mixture is added thereto. Further, an electrolyte such as sodium phosphate and peroxides and the like are added as an initiator to perform the polymerization. Then, after reaching a predetermined conversion rate, a charge transfer agent is added to terminate the polymerization, and the residual monomer is removed to obtain the rubber latex.

The emulsifier uses one or more of anionic surfactants such as alkali metal salts of fatty acids, alkali metal salts of rosin acids, sodium formaldehyde condensed naphthalene sulfonate, sulfate esters of higher alcohols, alkylbenzene sulfonates and aliphatic sulfonates, or nonionic surfactants such as alkyl ester type, alkyl ether type, or alkyl phenyl ether type of polyethylene glycol.

Among these emulsifiers, it is preferable to contain a metal salt of rosin acid, and it can be used alone (only one type), or it can be used in combination of two or more with other emulsifiers.

In the production of the (A) synthetic rubber latex having unsaturated diene in the EXAMPLES section of the present disclosure, an alkali metal salt of rosin acid was used alone.

Rosin acid is a mixture of rosin acids having a similar chemical structure, mainly composed of tricyclic diterpenes obtained from pine resin and the like. These rosin acids have three ring structures, two double bonds, and one carboxyl group, and have functional groups with high reactivity, such as the double bond portion reacting with unsaturated carboxylic acids, or esterification at the methylol end of resol phenolic resin and the carboxyl group portion.

The amount of the emulsifier used is 0.1 parts by weight to 8 parts by weight and preferably 1 part by weight to 5 parts by weight with respect to 100 parts by weight of all the monomers usually used for latex polymerization.

For example, a water-soluble initiator such as potassium persulfate, sodium persulfate and ammonium persulfate, a redox-based initiator, or an oil-soluble initiator such as benzoyl peroxide can be used as a polymerization initiator.

In the production of the (A) synthetic rubber latex having unsaturated diene in the EXAMPLES section of the present disclosure, potassium persulfate was used.

Examples of a chain transfer agent include monofunctional alkyl mercaptans such as n-hexyl mercaptan, t-dodecyl mercaptan, n-dodecyl mercaptan, n-octyl mercaptan, n-tetradecyl mercaptan, and t-hexyl mercaptan; bifunctional mercaptans such as 1,10-decanedithiol and ethylene glycol dithioglycolate; trifunctional mercaptans such as 1,5,10-canditrithiol, and trimethylolpropane tristhioglycolate; tetrafunctional mercaptans such as pentaerythritol tetrakisthioglycolate; disulfides; halide compounds such as carbon tetrachloride, carbon tetrabromide, and ethylene bromide; α-methylstyrene dimer, terpineol, α-terpinene, dipentene, and allyl alcohol. These may be used alone or in combination of two or more.

Among these chain transfer agents, alkyl mercaptan is preferable, and n-octyl mercaptan and t-dodecyl mercaptan are more preferable.

In the production of the (A) synthetic rubber latex having unsaturated diene in the EXAMPLES section of the present disclosure, t-dodecyl mercaptan was used.

The amount of the chain transfer agent used is 0.01 parts by weight to 5 parts by weight and preferably 0.1 parts by weight to 3 parts by weight with respect to 100 parts by weight of all the monomers usually used for latex polymerization.

In addition to the above, the latex of the present disclosure may contain additives such as age resistors such as hindered phenols, silicon-based, higher alcohol-based or mineral oil-based defoaming agents, reaction terminators, and antifreezing agents, if necessary.

«Vinylpyridine-styrene-butadiene copolymer rubber latex»

The vinylpyridine-styrene-butadiene copolymer rubber latex is a ternary copolymer of a vinylpyridine-based monomer, a styrene-based monomer, and a conjugated diene-based butadiene monomer.

As used herein, the vinylpyridine-based monomer includes vinylpyridine and substituted vinylpyridine in which a hydrogen atom in the vinylpyridine is substituted with a substituent. Examples of the vinylpyridine-based compound include 2-vinylpyridine, 3-vinylpyridine, 4-vinylpyridine, 2-methyl-5-vinylpyridine, and 5-ethyl-2-vinylpyridine, among which 2-vinylpyridine is preferable. These vinylpyridine-based monomers may be used alone or in combination of two or more.

The styrene-based monomer includes styrene and substituted styrene in which a hydrogen atom in the styrene is substituted with a substituent. Examples of the styrene-based monomer include styrene, α-methylstyrene, 2-methylstyrene, 3-methylstyrene, 4-methylstyrene, 2,4-diinopropylstyrene, 2,4-dimethylstyrene, 4-t-butylstyrene, and hydroxymethylstyrene, among which styrene is preferable. These styrene-based monomers may be used alone or in combination of two or more.

Examples of the conjugated diene-based butadiene monomer include aliphatic conjugated butadiene compounds such as 1,3-butadiene and 2-methyl-1,3-butadiene, among which 1,3-butadiene is preferable. These conjugated diene-based butadiene monomers may be used alone or in combination of two or more.

A known method can be used for the synthesis of the vinylpyridine-styrene-butadiene copolymer rubber latex, and specifically, the method described in JP H09-78045 A examined by the inventors of the present application can be used. With these methods, it is possible to have various compositions and intra-particle structures such as copolymers with uniform or different composition ratios within one particle of the vinylpyridine-styrene-butadiene copolymer rubber latex.

Regarding the vinylpyridine-styrene-butadiene copolymer rubber latex, examples of commercially-available products of the copolymer with a uniform composition monomer mixture ratio in one particle include Nipol2518 manufactured by Nippon Zeon Corporation and PYRATEX manufactured by NIPPON A&L INC., and examples of commercially-available products of the copolymer with different composition monomer mixture ratios in one particle include V0658 products manufactured by JSR Corporation. All of these can be used as the (A) synthetic rubber latex having unsaturated diene in the adhesive composition for organic fiber cords of the present disclosure.

In the vinylpyridine-styrene-butadiene copolymer rubber latex of the present disclosure, the monomer ratio of vinylpyridine: styrene: butadiene is not particularly limited. However, it is preferable to contain a copolymer obtained by polymerizing a monomer mixture composed of 5 % by mass to 20 % by mass of vinylpyridine, 10 % by mass to 40 % by mass of styrene, and 45 % by mass to 75 % by mass of butadiene in the copolymer constituting the vinylpyridine-styrene-butadiene copolymer particles. The reason is as follows. When the content of vinylpyridine is 5 % by mass or more, there is an appropriate amount of pyridine moiety, which has a vulcanization promoting effect, in the rubber component, and the adhesiveness of the entire adhesive layer further improves as the degree of cross-linking is increased by sulfur. When the content of vinylpyridine is 20 % by mass or less, it is possible to obtain a hard adhesive without the degree of cross-linking of the rubber being overvulcanized. When the content of styrene is 10 % by mass or more, the strength of the latex particles and the adhesive layer is sufficient, and the adhesiveness is further improved. When the

content of styrene is 40 % by mass or less, the adhesiveness is ensured with appropriate co-vulcanization properties between the adhesive layer and the adhered rubber. When the content of butadiene is 45 % by mass or more, it is possible to form crosslinks more sufficiently. When the content of butadiene is 75 % by mass or less, durability due to volume and modulus change can be ensured satisfactorily with moderate cross-linking.

In the (A) synthetic rubber latex having unsaturated diene in the EXAMPLES section of the present disclosure, the composition ratio of the monomer mixture of vinylpyridine: styrene: butadiene was set to 15:15:70.

The vinylpyridine-styrene-butadiene rubber latex may be a modified vinylpyridine-styrene-butadiene copolymer obtained by copolymerizing with other copolymerizable monomers.

Known copolymerizable monomers can be used. Examples thereof include ethylene; α-olefin monomers such as propylene, 1-butene, 4-methyl-1-pentene, and 1-hexene; aromatic vinyl monomers such as α-methylstyrene and monochlorostyrene; vinyl cyanide monomers such as acrylonitrile and methacrylonitrile; ethylene-based unsaturated carboxylic acid monomers such as acrylic acid, methacrylic acid, cinnamic acid, crotonic acid, itaconic acid, fumaric acid, maleic acid, and citraconic acid; ethylene-based unsaturated carboxylic acid alkyl ester monomers such as methyl (meth) acrylate, ethyl (meth) acrylate, butyl (meth) acrylate, and 2-ethylhexyl (meth) acrylate; unsaturated monomers containing hydroxyalkyl group such as β-hydroxyethyl acrylate and β-hydroxyethyl methacrylate; ethylene-based unsaturated carboxylic acid amide monomers such as acrylamide and methacrylamide; and anionic reactive emulsifiers such as polyoxyethylene alkyl propenyl ether ammonium sulfate, polyoxyethylene-1-(allyloxymethyl) alkyl ether ammonium sulfate, propenyl-2-ethylhexyl sulfosuccinate ester sodium, (meth) acrylic acid polyoxyethylene sulfate ester, and (meth) acrylic acid polyoxyethylene phosphate ester. Alternatively, a modified vinylpyridine-styrene-butadiene copolymer polymerized by containing a nonionic reactive emulsifier such as polyoxyethylene alkyl propenylphenyl ether can be used.

These other copolymerizable monomers may be used alone or in combination of two or more as long as the amount is 20 % by mass or less.

<(B) Gelatin>

The "(B) Gelatin" in the adhesive composition for organic fiber cords of the present disclosure refers to a linear polymer of amino acids, which is a water-soluble protein with denatured collagen obtained by treating collagen molecules contained in connective tissues such as animal skin, bones, scales, and tendons with acid or alkali, heating them with water to decompose them, and extracting and purifying them.

In one embodiment of the present disclosure, an example of the principle of action exhibited by the "(B) gelatin" contained in the adhesive composition for organic fiber cords of the present disclosure will be described with reference to FIGS. 2 and 3.

In a conventional adhesive composition for organic fiber cords containing resorcin and formalin, the resorcin and formalin are co-condensed on the surface of rubber latex in the adhesive composition for organic fiber cords with a methylol group of a resol-type resorcin-formaldehyde condensate added to a rosinate used as an emulsifier. The adhesiveness of the rubber latex is suppressed by coating by the chemical cross-linking of the phenolic resin formed thereby.

On the other hand, in the adhesive composition for organic fiber cords of the present disclosure, gelatin 12 forms a network of ceratin molecules in water to cover the surface of the synthetic rubber latex 11 (core) having unsaturated diene. This coating suppresses the adhesiveness of the synthetic rubber latex 11 having unsaturated diene (latex-gelatin protective film effect 20).

As a result, the adhesive composition for organic fiber cords of the present disclosure containing the "(B) gelatin" achieves that

(2) in a process of coating an organic fiber cord with the adhesive composition for organic fiber cords and drying and heat curing, it is possible to suppress the adhesion of the adhesive composition for organic fiber cords to a roller or the like by suppressing the adhesiveness of rubber latex, which is measured as the mechanical stability of the adhesive liquid under shear strain, thereby achieving good operability.

Further, the gelatin 12 of the adhesive composition 2 for organic fiber cords of the present disclosure coated on the surface of the organic fiber cord 1 is chemically cross-linked with acid components on the surface of the rubber latex 11 by heat treatment, thereby

(3) achieving good adhesion between an organic fiber cord and a coated rubber composition.

In the gelatin 12 of the adhesive composition for organic fiber cords of the present disclosure, a functional group of the gelatin 12 and an activated isocyanate group 14 of an aqueous urethane compound 13 having a (thermal dissociative blocked) isocyanate group form a gelatin-isocyanate crosslink 22. As a result, the adhesive composition for organic fiber cords of the present disclosure containing the "(B) gelatin" and the "(C) aqueous compound having a (thermal dissociative blocked) isocyanate group" achieves

(3) good adhesion between an organic fiber cord and a coated rubber composition.

The (B) gelatin is not limited, and it can be obtained by heating collagen, which is a component derived from

biological tissues such as skin, bones, tendons, etc. of animals (for example, pigs, cows, rabbits, sheep, mice, birds, fish, humans, etc.) and extracting gelatin. The collagen is also available as a commercial product. It can also be obtained by applying gene recombination technologies to collagen extracted from a living tissue.

Further, it can be obtained by subjecting an animal skin or the like to acid treatment (acid-treated gelatin) or subjecting an animal bone or the like to alkali treatment (alkali-treated gelatin). These gelatins contain a polypeptide chain having a number average molecular weight of about 100,000, a dimer and a trimer thereof, and a polypeptide chain obtained by hydrolyzing them, and the number average molecular weight is about 300,000.

The (B) gelatin in the adhesive composition for organic fiber cords of the present disclosure is not particularly limited if it is gelatin capable of forming jelly-like mass gel by sol-gel transition when the gelatin aqueous solution is heated and then cooled to lower the temperature. The gelatin thus obtained, gelatin processed products such as low-molecular weight gelatin obtained by further decomposing the gelatin thus obtained by heat decomposition, acid, alkali decomposition or proteolytic enzyme to form a polypeptide chain having a number average molecular weight of 2,000 to 26,000, and commercially-available gelatin can be used as the gelatin (B) in the adhesive composition for organic fiber cords of the present disclosure. These may be used alone or in combination of two or more.

In the adhesive composition for organic fiber cords of the present disclosure, the content of the (B) gelatin is not particularly limited, but it is preferably 0.1 % by mass or more, and it is preferably 15 % by mass or less. The reason is as follows. When it is 0.1 % by mass or more, it is possible to further suppress the adhesion of the adhesive composition for organic fiber cords to a roller or the like, thereby further improving the operability. When it is 15 % by mass or less, there is an appropriate amount of gelatin contained in the adhesive layer, and the fracture resistance of the adhesive layer can be sufficiently secured. It is more preferably 0.4 % by mass or more. It is more preferably 5 % by mass or less.

<(C) Aqueous compound having a (thermal dissociative blocked) isocyanate group>

The "(thermal dissociative blocked) isocyanate group" of the "(C) aqueous compound having a (thermal dissociative blocked) isocyanate group" in the adhesive composition for organic fiber cords of the present disclosure means a thermal dissociative blocked isocyanate group or isocyanate group, including

(i) a thermal dissociative blocked isocyanate group formed by the reaction of an isocyanate group with a thermal dissociative blocking agent for the isocyanate group,
(ii) an isocyanate group where the isocyanate group has not reacted with a thermal dissociative blocking agent for the isocyanate group,
(iii) an isocyanate group formed by dissociation of a thermal dissociative blocking agent from a thermal dissociative blocked isocyanate group, and
(iv) an isocyanate group.

The "aqueous" of the "(C) aqueous compound having a (thermal dissociative blocked) isocyanate group" in the adhesive composition for organic fiber cords of the present disclosure indicates that it is water-soluble or water-dispersible. The "water-soluble" does not necessarily mean completely water-soluble, but also means that it is partially water-soluble, and it also means that phase separation will not occur in the aqueous solution of the adhesive composition for organic fiber cords of the present disclosure.

The content of the (C) aqueous compound having a (thermal dissociative blocked) isocyanate group in the adhesive composition for organic fiber cords of the present disclosure is not particularly limited, but it is preferably 5 % by mass or more, and it is preferably 75 % by mass or less. The reason is as follows. When it is 5 % by mass or more, the adhesiveness between the organic fiber cord and the coated rubber composition is further improved. When it is 75 % by mass or less, it is possible to secure the content of other components such as rubber latex to be blended in the adhesive composition for organic fiber cords to a certain level or more, and as a result, the adhesion to the coated rubber is further improved. It is more preferably 15 % by mass or more. It is more preferably 60 % by mass or less.

The "(C) aqueous compound having a (thermal dissociative blocked) isocyanate group" in the adhesive composition for organic fiber cords of the present disclosure is preferably
(C-1) a water-dispersible (thermal dissociative blocked) isocyanate compound that is an addition product of polyisocyanate having an aromatic ring and a blocking agent having one or more active hydrogen groups.

The "(C) aqueous compound having a (thermal dissociative blocked) isocyanate group" in the adhesive composition for organic fiber cords of the present disclosure is more preferably
(C-2) an aqueous urethane compound having a (thermal dissociative blocked) isocyanate group

«(C-1) Water-dispersible (thermal dissociative blocked) isocyanate compound that is an addition product of polyisocyanate having an aromatic ring and a blocking agent having one or more active hydrogen groups»

For the "(C-1) water-dispersible (thermal dissociative blocked) isocyanate compound that is an addition product of polyisocyanate having an aromatic ring and a blocking agent having one or more active hydrogen groups", the "active hydrogen group" refers to a group containing hydrogen that becomes active hydrogen (atomic hydrogen (hydrogen radical) and hydride ion (hydride)) when placed under suitable conditions. Examples of the active hydrogen group include an amino group and a hydroxyl group.

For the "(C-1) water-dispersible (thermal dissociative blocked) isocyanate compound that is an addition product of polyisocyanate having an aromatic ring and a blocking agent having one or more active hydrogen groups", the "blocking agent" is not particularly limited if it is a blocking agent compound that protects the isocyanate group from any chemical reaction where the blocking agent can be dissociated by heat treatment as necessary to restore the isocyanate group. The blocking agent is preferably, for example, a blocking agent compound that can be dissociated by heat treatment at the temperature of the process of the hot zone 7 in FIG. 1 to restore the isocyanate group.

Examples of the "blocking agent having one or more active hydrogen" in the "(C-1) water-dispersible (thermal dissociative blocked) isocyanate compound that is an addition product of polyisocyanate having an aromatic ring and a blocking agent having one or more active hydrogen groups" include alcohol, phenol, active methylene, oxime, lactam, and amine. Specific examples thereof include, but are not limited to, lactams such as ε-caprolactam, δ-valerolactam, and γ-butyrolactam; phenols such as phenol, cresol, ethylphenol, butylphenol, octylphenol, nonylphenol, dinonylphenol, thiophenol, chlorphenol, and amylphenol; oximes such as methylethylketoxime, acetone oxime, acetophenone oxime, benzophenone oxime, and cyclohexanone oxime; alcohols such as methanol, ethanol, butanol, isopropyl alcohol, butyl alcohol, and cyclohexanol; malonic acid dialkyl esters such as dimethyl malonate and diethyl malonate; active methylenes such as methyl acetoacetate, ethyl acetoacetate, and acetylacetone, mercaptans such as butyl mercaptan and dodecyl mercaptan; amides such as acetanilide and acetic acid amide; imides such as succinimide, phthalic acid imide, and maleic acid imide; sulfites such as sodium bisulfite; cellosolves such as methyl cellosolve, ethyl cellosolve and butyl cellosolve; pyrazoles such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; amines such as dimethylamine, diethylamine, di-n-propylamine, diisopropylamine, dicyclohexylamine, diphenylamine, xylidine, N,N-diethylhydroxyamine, N,N'-diphenylformamidine, 2-hydroxypyridine, 3-hydroxypyridine, and 2-mercaptopyridine; and triazoles such as 1,2,4-triazole. A mixture of two or more of these may be used. The blocking agent is preferably phenol, ε-caprolactam and ketoxime, which facilitates to obtain stable heat curing of the adhesive composition by thermal dissociation by heating.

Specific examples of the "(C-1) water-dispersible (thermal dissociative blocked) isocyanate compound that is an addition product of polyisocyanate having an aromatic ring and a blocking agent having one or more active hydrogen groups" include an aromatic polyisocyanate compound and an aromatic aliphatic polyisocyanate compound.

Examples of the aromatic polyisocyanate compound include phenylene diisocyanates such as m-phenylene diisocyanate and p-phenylene diisocyanate; tolylene diisocyanates such as 2,4-tolylene diisocyanate and 2,6-tolylene diisocyanate (TDI); diphenylmethane diisocyanates such as 2,4'-diphenylmethane diisocyanate, 4,4'-diphenylmethane diisocyanate (MDI), dialkyldiphenylmethane diisocyanate, and tetraalkyldiphenylmethane diisocyanate; polymethylene polyphenyl polyisocyanate (polymeric MDI); mor p-isocyanatophenylsulfonyl isocyanates; diisocyanatobiphenyls such as 4,4'-diisocyanatobiphenyl and 3,3'-dimethyl-4,4'-diisocyanatobiphenyl; and naphthalene diisocyanates such as 1,5-naphthylene diisocyanate.

Examples of the aromatic aliphatic polyisocyanate compound include xylylene diisocyanates such as m-xylylene diisocyanate, p-xylylene diisocyanate (XDI), and tetramethylxylylene diisocyanate; diethylbenzene diisocyanate; and α,α,α,α-tetramethylxylylene diisocyanate (TMXDI).

Further, examples thereof also include modified products such as carbodiimide, polyol and allophanate of the aromatic polyisocyanate compound.

Among the above, an aromatic polyisocyanate compound is preferable, and 2,6-tolylene diisocyanate (TDI), 4,4'-diphenylmethane diisocyanate (MDI) or polymethylene polyphenyl polyisocyanate (polymeric MDI) are more preferable, and 4,4'-diphenylmethane diisocyanate (MDI) is particularly preferable, from the viewpoint of the cord focusing properties of the adhesive composition

«(C-2) Aqueous urethane compound having a (thermal dissociative blocked) isocyanate group»

For the "(C-2) aqueous urethane compound having a (thermal dissociative blocked) isocyanate group", the thermal dissociative blocking agent is not particularly limited if it is a blocking agent compound that protects the isocyanate group from any chemical reaction where the blocking agent can be dissociated by heat treatment as necessary to restore the isocyanate group.

Specific examples of the thermal dissociative blocking agent include the same compounds mentioned above as the blocking agent in the «(C-1) water-dispersible (thermal dissociative blocked) isocyanate compound that is an addition product of polyisocyanate having an aromatic ring and a blocking agent having one or more active hydrogen groups» section. Preferable examples thereof include phenols such as phenol, thiophenol, chlorphenol, cresol, resorcinol, p-sec-butylphenol, p-tert-butylphenol, p-sec-amylphenol, p-octylphenol, and p-nonylphenol; secondary or tertiary alcohols such as isopropyl alcohol and tert-butyl alcohol; aromatic secondary amines such as diphenylamine and xylidine; phthalic acid imides; lactams such as δ-valerolactam; caprolactams such as ε-caprolactam; malonic acid dialkyl esters such as diethyl malonate and dimethyl malonate, active methylene compounds such as acetylacetone and acetoacetic acid alkyl ester; oximes such as acetone oxime, methyl ethyl ketoxime, and cyclohexanone oxime; and basic nitrogen compounds and acid sodium sulfites such as 3-hydroxypyridine, 1,2-pyrazole, 3,5-dimethylpyrazole, 1,2,4-triazole, diisopropylamine, and N,N'-diphenylformamidine. The blocking agent is preferably phenol, ε-caprolactam and ketoxime, which facilitates to obtain stable heat curing of the adhesive composition by thermal dissociation by heating.

The "aqueous" of the "aqueous urethane compound" indicates that it is water-soluble or water-dispersible. The "water-soluble" does not necessarily mean completely water-soluble, but also means that it is partially water-soluble, and it also means that phase separation will not occur in the aqueous solution of the adhesive composition for organic fiber cords of the present disclosure.

The "urethane compound" of the "aqueous urethane compound" is a compound having a covalent bond formed between nitrogen of an amine and carbon of a carbonyl group, and it refers to a compound represented by the following general formula,

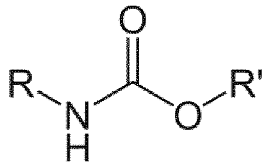

where R and R' represent a hydrocarbon group.

The molecular weight of the "(C-2) aqueous urethane compound having a (thermal dissociative blocked) isocyanate group" is not particularly limited if the compound is water-based. However, the number average molecular weight is preferably 1,500 to 100,000. The number average molecular weight is particularly preferably 9,000 or less.

As described above, a method of synthesizing the "(C-2) aqueous urethane compound having a (thermal dissociative blocked) isocyanate group" in the adhesive composition for organic fiber cords of the present disclosure is not particularly limited, but a known method such as the method described in JP S63-51474 A can be used.

<<Preferred embodiment of "(C-2) aqueous urethane compound having a (thermal dissociative blocked) isocyanate group">>

A preferred embodiment of the "(C-2) aqueous urethane compound having a (thermal dissociative blocked) isocyanate group" in the adhesive composition for organic fiber cords of the present disclosure is a reaction product obtained by mixing (α), (β), (γ) and (δ) and reacting them, where

(α) is an organic polyisocyanate compound having 3 or more and 5 or less functional groups and having a number average molecular weight of 2,000 or less,
(β) is a compound having 2 or more and 4 or less active hydrogen groups and a number average molecular weight of 5,000 or less,
(γ) is a thermal dissociative blocking agent, and
(δ) is a compound having at least one active hydrogen group and at least one anionic, cationic, or nonionic hydrophilic group, and
(α), (β), (γ) and (δ) are mixed so that
the mixing ratio of (α) is 40 % by mass or more and 85 % by mass or less,
the mixing ratio of (β) is 5 % by mass or more and 35 % by mass or less,
the mixing ratio of (γ) is 5 % by mass or more and 35 % by mass or less, and
the mixing ratio of (δ) is 5 % by mass or more and 35 % by mass or less

with respect to the total amount of (α), (β), (γ) and (δ), and
when the molecular weight of the isocyanate group (-NCO) is 42, the composition ratio of the (thermal dissociative blocked) isocyanate group in the reaction product is 0.5 % by mass or more and 11 % by mass or less.

In this case, the "(C-2) aqueous urethane compound having a (thermal dissociative blocked) isocyanate group" has both a (thermal dissociative blocked) isocyanate group moiety and a hydrophilic moiety having a hydrophilic group, so that the self-water solubility of the urethane compound is increased.

The (α) organic polyisocyanate compound having 3 or more and 5 or less functional groups and having a number average molecular weight of 2,000 or less is not particularly limited. However, it is preferably an aromatic polyisocyanate compound and an oligomer thereof, and it may be another aliphatic, alicyclic, or heterocyclic polyisocyanate compound and an oligomer thereof. This is because the "(C-2) aqueous urethane compound having a (thermal dissociative blocked) isocyanate group" obtained as a reaction product after reacting the (α) organic polyisocyanate compound having 3 or more and 5 or less functional groups and having a number average molecular weight of 2,000 or less as described above is easier to disperse into the gaps of the polymer chain of an organic fiber cord.

Specific examples thereof include, as an aliphatic polyisocyanate compound, ethylene diisocyanate, 1,4-tetramethylene diisocyanate, 1,6-hexamethylene diisocyanate, 1,12-dodecane diisocyanate, 2,2,4-trimethylhexamethylene diisocyanate, 2,4,4-trimethylhexamethylene diisocyanate, dimer acid diisocyanate, and lysine diisocyanate, as an alicyclic polyisocyanate compound, cyclobutane-1,3-diisocyanate, cyclohexane-1,3-diisocyanate, cyclohexane-1,4-diisocyanate, isophorone diisocyanate, 4,4'-methylenebis (cyclohexylisocyanate), methylcyclohexane-2,4-diisocyanate, methylcyclohexane-2,6-diisocyanate, and 1,3-(isocyanatomethyl) cyclohexane, as a heterocyclic polyisocyanate compound, tolylene diisocyanate adduct of 1,3,5-tris (2'-hydroxyethyl) isocyanuric acid, as an aromatic polyisocyanate compound, m-phenylene diisocyanate, p-phenylene diisocyanate, 2,4-tolylene diisocyanate, 2,6-tolylene diisocyanate, m-xylylene diisocyanate, p-xylylene diisocyanate, 2,4'-diphenylmethane diisocyanate, 4,4'-diphenylmethane diisocyanate, m-tetramethylxylylene diisocyanate, p-tetramethylxylylene diisocyanate, methinetris (4-phenylisocyanate), tris (4-isocyanatophenyl) methane, tris thiophosphate (4-isocyanatophenyl ester), 3-isopropenyl-α',α'-dimethylbenzyl isocyanate and oligomer mixtures thereof, and modified products such as carbodiimides, polyols and allophanates of these polyisocyanate compounds.

Among the above, an aromatic polyisocyanate compound is preferable, and methylenediphenyl polyisocyanate, polyphenylene polymethylene polyisocyanate and the like are particularly preferable. Polyphenylene polymethylene polyisocyanate having a number average molecular weight of 2,000 or less is preferable, and polyphenylene polymethylene polyisocyanate having a number average molecular weight of 1,000 or less is particularly preferable. This is because the "(C-2) aqueous urethane compound having a (thermal dissociative blocked) isocyanate group" obtained as a reaction product after reacting the (α) organic polyisocyanate compound having 3 or more and 5 or less functional groups and having a number average molecular weight of 2,000 or less as described above is easier to disperse into the gaps of the polymer chain of an organic fiber cord.

The (β) compound having 2 or more and 4 or less active hydrogen groups and a number average molecular weight of 5,000 or less is not particularly limited. Specific examples thereof include compounds selected from the group consisting of the following (i) to (vii),

(i) polyhydric alcohols having 2 or more and 4 or less hydroxyl groups and having a number average molecular weight of 5,000 or less,
(ii) multivalent amines having 2 or more and 4 or less primary and/or secondary amino groups and having a number average molecular weight of 5,000 or less,
(iii) amino alcohols having 2 or more and 4 or less primary and/or secondary amino groups and hydroxyl groups and having a number average molecular weight of 5,000 or less,
(iv) polyester polyols having 2 or more and 4 or less hydroxyl groups and having a number average molecular weight of 5,000 or less,
(v) polybutadiene polyols having 2 or more and 4 or less hydroxyl groups and having a number average molecular weight of 5,000 or less, and copolymers thereof with other vinyl monomers,
(vi) polychloroprene polyols having 2 or more and 4 or less hydroxyl groups and having a number average molecular weight of 5,000 or less, and copolymers thereof with other vinyl monomers, and
(vii) polyester polyols having 2 or more and 4 or less hydroxyl groups and having a number average molecular weight of 5,000 or less,

which is

multivalent amine,
C2-C4 alkylene oxide heavy adduct of polyhydric phenol and amino alcohols,
C2-C4 alkylene oxide heavy adduct of C3 or higher polyhydric alcohols,
C2-C4 alkylene oxide copolymer, or
C3-C4 alkylene oxide polymer.

For the "(C-2) aqueous urethane compound having a (thermal dissociative blocked) isocyanate group" in the adhesive composition for organic fiber cords of the present disclosure, the "active hydrogen group" refers to a group containing hydrogen that becomes active hydrogen (atomic hydrogen (hydrogen radical) and hydride ion (hydride)) when placed under suitable conditions. Examples of the active hydrogen group include an amino group and a hydroxyl group.
The compound having at least one active hydrogen group and at least one anionic hydrophilic group of the "(δ) compound having at least one active hydrogen group and at least one anionic, cationic, or nonionic hydrophilic group" is not particularly limited. Examples thereof include aminosulfonic acids such as taurine, N-methyltaurine, N-butyltaurine and sulfanilic acid, and aminocarboxylic acids such as glycine and alanine.
A method of synthesizing the "(C-2) aqueous urethane compound having a (thermal dissociative blocked) isocyanate group" in the adhesive composition for organic fiber cords of the present disclosure by mixing and reacting the above-described (α), (β), (γ) and (δ) is not particularly limited, and a known method such as the method described in JP S63-51474 A may be used.

<<Another preferred embodiment of "(C-2) aqueous urethane compound having a (thermal dissociative blocked) isocyanate group">>

Another preferred embodiment of the "(C-2) aqueous urethane compound having a (thermal dissociative blocked) isocyanate group" in the adhesive composition for organic fiber cords of the present disclosure is a reaction product obtained by mixing (α), (β), (γ), (δ) and (ε) and reacting them, where

(α) is an organic polyisocyanate compound having 3 or more and 5 or less functional groups and having a number average molecular weight of 2,000 or less,
(β) is a compound having 2 or more and 4 or less active hydrogen groups and a number average molecular weight of 5,000 or less,
(γ) is a thermal dissociative blocking agent,
(δ) is a compound having at least one active hydrogen group and at least one anionic, cationic, or nonionic hydrophilic group, and
(ε) is a compound containing an active hydrogen group other than (α), (β), (γ) and (δ), and
(α), (β), (γ), (δ) and (ε) are mixed so that
the mixing ratio of (α) is 40 % by mass or more and 85 % by mass or less,
the mixing ratio of (β) is 5 % by mass or more and 35 % by mass or less,
the mixing ratio of (γ) is 5 % by mass or more and 35 % by mass or less,
the mixing ratio of (δ) is 5 % by mass or more and 35 % by mass or less, and
the mixing ratio of (ε) is more than 0 % by mass and 45 % by mass or less

with respect to the total amount of (α), (β), (γ), (δ) and (ε), and
when the molecular weight of the isocyanate group (-NCO) is 42, the composition ratio of the (thermal dissociative blocked) isocyanate group in the reaction product is 0.5 % by mass or more and 11 % by mass or less.
In this case, the (C-2) aqueous urethane compound having a (thermal dissociative blocked) isocyanate group has both a (thermal dissociative blocked) isocyanate group moiety and a hydrophilic moiety having a hydrophilic group, so that the self-water solubility of the urethane compound is increased.
Here, the (α) organic polyisocyanate compound having 3 or more and 5 or less functional groups and having a number average molecular weight of 2,000 or less, the (β) compound having 2 or more and 4 or less active hydrogen groups and a number average molecular weight of 5,000 or less, the (γ) thermal dissociative blocking agent, and the (δ) compound having at least one active hydrogen group and at least one anionic, cationic, or nonionic hydrophilic group are as described in the above-described <<referred embodiment of "(C-2) aqueous urethane compound having a (thermal dissociative blocked) isocyanate group">> except for the mixing ratio.
A method of synthesizing the "(C-2) aqueous urethane compound having a (thermal dissociative blocked) isocyanate group" in the adhesive composition for organic fiber cords of the present disclosure by mixing and reacting the above-described (α), (β), (γ), (δ) and (ε) is not particularly limited, and a known method such as the method described in JP S63-51474 A may be used.

«Yet another preferred embodiment of "(C-2) aqueous urethane compound having a (thermal dissociative blocked) isocyanate group"»

Yet another preferred embodiment of the "(C-2) aqueous urethane compound having a (thermal dissociative blocked) isocyanate group" in the adhesive composition for organic fiber cords of the present disclosure is represented by the following general formula (I),

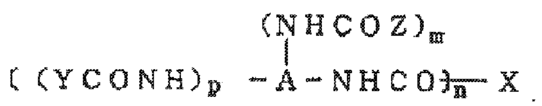

(I)

(where

A is a residue of an organic polyisocyanate compound from which an active hydrogen group has been eliminated,
X is a residue of a polyol compound having 2 or more and 4 or less hydroxyl groups and having a number average molecular weight of 5,000 or less from which an active hydrogen group has been eliminated,
Y is a residue of a thermal dissociative blocking agent from which an active hydrogen group has been eliminated,
Z is a residue of a compound having at least one active hydrogen group and a group that produces at least one salt or a hydrophilic polyether chain, from which an active hydrogen group has been eliminated,
n is an integer of 2 or more and 4 or less, and
p + m is an integer of 2 or more and 4 or less ($m \geq 0.25$).

In this case, the "(C-2) aqueous urethane compound having a (thermal dissociative blocked) isocyanate group" has both a (thermal dissociative blocked) isocyanate group moiety and a hydrophilic moiety having a hydrophilic group, so that the self-water solubility of the urethane compound is increased.
In the formula (I), the "organic polyisocyanate compound" of the A "residue of an organic polyisocyanate compound from which an active hydrogen group has been eliminated" preferably contains an aromatic ring. In this case, the "(C-2) aqueous urethane compound having a (thermal dissociative blocked) isocyanate group" is easier to disperse into the gaps of the polymer chain of an organic fiber cord.
Examples thereof include, but are not limited to, methylenediphenyl polyisocyanate and polyphenylene polymethylene polyisocyanate. Polyphenylene polymethylene polyisocyanate having a number average molecular weight of 6,000 or less is preferable, and polyphenylene polymethylene polyisocyanate having a number average molecular weight of 4,000 or less is particularly preferable.
In the formula (I), the "polyol compound having 2 or more and 4 or less hydroxyl groups and having a number average molecular weight of 5,000 or less" of the X "residue a polyol compound having 2 or more and 4 or less hydroxyl groups and having a number average molecular weight of 5,000 or less from which an active hydrogen group has been eliminated" is not particularly limited. Specific examples thereof include compounds selected from the group consisting of the following (i) to (vi),

(i) polyhydric alcohols having 2 or more and 4 or less hydroxyl groups and having a number average molecular weight of 5,000 or less,
(ii) amino alcohols having 2 or more and 4 or less primary and/or secondary amino groups and hydroxyl groups and having a number average molecular weight of 5,000 or less,
(iii) polyester polyols having 2 or more and 4 or less hydroxyl groups and having a number average molecular weight of 5,000 or less,
(iv) polybutadiene polyols having 2 or more and 4 or less hydroxyl groups and having a number average molecular weight of 5,000 or less, and copolymers thereof with other vinyl monomers,
(v) polychloroprene polyols having 2 or more and 4 or less hydroxyl groups and having a number average molecular weight of 5,000 or less, and copolymers thereof with other vinyl monomers, and
(vi) polyester polyols having 2 or more and 4 or less hydroxyl groups and having a number average molecular weight of 5,000 or less,

which is

multivalent amine,
C2-C4 alkylene oxide heavy adduct of polyhydric phenol and amino alcohols,
C2-C4 alkylene oxide heavy adduct of C3 or higher polyhydric alcohols,
C2-C4 alkylene oxide copolymer, or
C3-C4 alkylene oxide polymer.

The "(C-2) aqueous urethane compound having a (thermal dissociative blocked) isocyanate group" in the adhesive composition for organic fiber cords of the present disclosure is not particularly limited, and commercially available products such as ELASTRON BN27, BN77, and BN11 manufactured by DKS Co. Ltd. can be used. It is

preferably the product synthesized in the EXAMPLES section in the present specification, or the BN77.

<<Adhesion promoting effect of (C) aqueous compound having a (thermal dissociative blocked) isocyanate group>>

In a conventional adhesive composition for organic fiber cords containing resorcin and formalin, a sea-island structure is formed in which rubber latex particles (like islands) are dispersed in a phenolic resin (like the sea) in which the resorcin and formalin are co-condensed, thereby obtaining good adhesion between the phenolic resin covering the surface of an organic fiber cord and the organic fiber cord

On the other hand, in the adhesive composition for organic fiber cords of the present disclosure, the "(C) aqueous compound having a (thermal dissociative blocked) isocyanate group" may act as an adhesion promoter because of the following two functional effects instead of the phenolic resin in which resorcin and formalin are co-condensed:

(a) a functional effect where the aqueous compound is distributed at a position near the interface between an organic fiber cord and an adhesive layer of the adhesive composition for organic fiber cords, so that the adhesion between the organic fiber cord and the adhesive layer is promoted, and

(b) a functional effect where in the adhesive layer of the adhesive composition for organic fiber cords, a three-dimensional network structure is formed by cross-linking of the isocyanate group by the compound having a (thermal dissociative blocked) isocyanate group, so that the adhesive layer is reinforced.

As a result, in the adhesive composition for organic fiber cords of the present disclosure, the "(C) aqueous compound having a (thermal dissociative blocked) isocyanate group" mainly contributes to the effect of the adhesive composition for organic fiber cords of the present disclosure of achieving

(3) good adhesion between an organic fiber cord and a coated rubber composition.

In one embodiment of the adhesive composition for organic fiber cords of the present disclosure, an example of the principles of the above-described (a) and (b), which are the two functional effects of the "(C) aqueous urethane compound having a (thermal dissociative blocked) isocyanate group" as an adhesion promoter, will be suitably described in detail

with reference to FIG. 2 in a case where the "(C) aqueous urethane compound having a (thermal dissociative blocked) isocyanate group" is (C-1) a water-dispersible (thermal dissociative blocked) isocyanate compound that is an addition product of polyisocyanate having an aromatic ring and a blocking agent having one or more active hydrogen groups, and

with reference to FIG. 3 in a case where the "(C) aqueous urethane compound having a (thermal dissociative blocked) isocyanate group" is (C-2) an aqueous urethane compound having a (thermal dissociative blocked) isocyanate group

**<**<<**R**egarding the functional effect of (a) as an adhesion promoter>>>

A polyester synthetic resin material such as polyethylene terephthalate, which is widely used as an organic fiber cord, contains a flat linear polymer chain. The surface of the polymer chain or the gaps of the polymer chain has a $\pi$-electron atmosphere derived from the aromatics and the like contained in the polymer chain. Further, polyester has a particularly small number of hydroxyl groups on the surface as compared with 6,6-nylon. Therefore, conventionally, an adhesive composition for organic fiber cords used for an organic fiber cord made of polyester has contained molecules having a planar structure having an aromatic ring with aromatic $\pi$ electrons on the side surface ("a part that easily diffuse into the organic fiber cord") as an adhesion promoter for the purposes that

- the adhesive composition for organic fiber cords is dispersed into the gaps of the polymer chain of an organic fiber cord, and
- an adhesive layer of the adhesive composition for organic fiber cords adheres to the surface of the polymer chain of the organic fiber cord to obtain sufficient adhesiveness.

The "(C-1) water-dispersible (thermal dissociative blocked) isocyanate compound that is an addition product of polyisocyanate having an aromatic ring and a blocking agent having one or more active hydrogen groups" has been used as a specific example of such an adhesion promoter,

As illustrated in FIG. 2, in the adhesive layer containing the "(C-1) water-dispersible (thermal dissociative blocked) isocyanate compound that is an addition product of polyisocyanate having an aromatic ring and a blocking agent having one or more active hydrogen groups", (C-1) a water-dispersible (thermal dissociative blocked) isocyanate compound 40 that is an addition product of polyisocyanate having an aromatic ring and a blocking agent having one or

more active hydrogen groups, while diffusing into an organic fiber cord 1 (aromatic isocyanate-organic fiber cord diffusion effect 41), forms a gelatin-isocyanate crosslink 22 with gelatin 12 contained in an adhesive layer 32 inside the adhesive layer 32 of an adhesive composition 2 for organic fiber cords, thereby achieving that

- the adhesive composition 2 for organic fiber cords is dispersed into the gaps of the polymer chain of the organic fiber cord 1, and
- the adhesive layer 32 of the adhesive composition 2 for organic fiber cords adheres to the surface of the polymer chain of the organic fiber cord 1.

For the "(C-1) water-dispersible (thermal dissociative blocked) isocyanate compound that is an addition product of polyisocyanate having an aromatic ring and a blocking agent having one or more active hydrogen groups", the particle size is preferably 0.01 μm to 0.50 μm. The reason is as follows. In an adhesive layer of the "(C-1) water-dispersible (thermal dissociative blocked) isocyanate compound that is an addition product of polyisocyanate having an aromatic ring and a blocking agent having one or more active hydrogen groups", the diffusion from the surface of the polymer chain of an organic fiber cord to the gaps of the polymer chain of the organic fiber cord, where aromatic π electrons are more abundantly present, becomes easier over time, whereas the effect as an adhesion promoter decreases. However, if the particle size is 0.01 μm or more, more particles remain on the surface of the organic fiber cord. Further, if the particle size is 0.50 μm or less, the problem that the compound precipitates in liquid to cause non-uniform diffusion in the adhesive layer is less likely to occur.

The "(C-1) water-dispersible (thermal dissociative blocked) isocyanate compound that is an addition product of polyisocyanate having an aromatic ring and a blocking agent having one or more active hydrogen groups" is more preferably (blocked) isocyanate (see PTL 3) such as methylene diphenyl diisocyanate having a particle size of 0.01 μm to 0.50 μm .

For the adhesive composition for organic fiber cords of the present disclosure, the "(C) aqueous urethane compound having a (thermal dissociative blocked) isocyanate group" is more preferably "(C-2) an aqueous urethane compound having a (thermal dissociative blocked) isocyanate group" having a hydrophobic aromatic polyisocyanate part that is "a part that easily diffuse into an organic fiber cord" and a hydrophilic molecular chain part that is "a part that is difficult to diffuse into an organic fiber cord" in its molecular structure.

As illustrated in the adhesive composition for organic fiber cords of the present disclosure in FIG. 3, an aqueous urethane compound 13 having a (thermal dissociative blocked) isocyanate group has both a part 15 that easily diffuses into an organic fiber cord 1 and a part 16 that is difficult to diffuse into the organic fiber cord 1 in an adhesive layer 32 of an adhesive composition 2 for organic fiber cords.

Because of the presence of the part 15 that easily diffuses into the organic fiber cord 1,

- the adhesive composition 2 for organic fiber cords is dispersed into the gaps of the polymer chain of the organic fiber cord 1, and
- the adhesive layer 32 of the adhesive composition 2 for organic fiber cords adheres to the surface of the polymer chain of the organic fiber cord 1.

Further, because of the presence of the part 16 that is difficult to diffuse into the organic fiber cord 1, the aqueous urethane compound 13 having a (thermal dissociative blocked) isocyanate group maintains high adhesiveness between the organic fiber cord 1 and the adhesive layer 32 of the adhesive composition 2 for organic fiber cords (aqueous urethane-organic fiber cord interface effect 24).

As a result, the adhesive composition for organic fiber cords of the present disclosure containing "(C-2) an aqueous urethane compound having a (thermal dissociative blocked) isocyanate group" achieves more in
(3) good adhesion between an organic fiber cord and a coated rubber composition.

Because the "(C) aqueous compound having a (thermally dissociative blocked) isocyanate group" tends to disperse in water as compared with in the surface of the hydrophobic organic fiber cord 1, it is more preferably "(C-2) an aqueous urethane compound having a (thermal dissociative blocked) isocyanate group" which is an aromatic polyisocyanate compound having an anionic or nonionic water-soluble functional group.

<<<Regarding the functional effect of (b) as an adhesion promoter>>>

As illustrated in FIG. 2, in an adhesive layer where the "(C) aqueous compound having a (thermally dissociative blocked) isocyanate group" is "(C-1) a water-dispersible (thermal dissociative blocked) isocyanate compound that is an addition product of polyisocyanate having an aromatic ring and a blocking agent having one or more active hydrogen groups", an activated isocyanate group of a water-dispersible (thermal dissociative blocked) isocyanate compound 40 that is an addition product of polyisocyanate having an aromatic ring and a blocking agent having one or more active

hydrogen groups from which a blocking agent has been thermally dissociated forms a gelatin-isocyanate crosslink 22 with the molecular chain of adjacent gelatin 12, thereby obtaining an adhesive layer containing a three-dimensional network structure.

As a result, the adhesive composition for organic fiber cords of the present disclosure containing "(C-1) a water-dispersible (thermal dissociative blocked) isocyanate compound that is an addition product of polyisocyanate having an aromatic ring and a blocking agent having one or more active hydrogen groups" achieves

(3) good adhesion between an organic fiber cord and a coated rubber composition.

Because a material in which aromatic-based powder is forcibly emulsified and dispersed is used, it is preferable to stir the dipping bath (dipping tank) 3 in FIG. 1 so that the compound will not precipitate in liquid to cause non-uniform dispersion and aggregation in the adhesive layer.

On the other hand, in the adhesive composition for organic fiber cords of the present disclosure, the "(C) aqueous urethane compound having a (thermal dissociative blocked) isocyanate group" is more preferably "(C-2) an aqueous urethane compound having a (thermal dissociative blocked) isocyanate group".

The "(C-2) aqueous urethane compound having a (thermal dissociative blocked) isocyanate group" preferably contains an alkylene oxide part or the like in the compound molecule. This is because it can be more easily and uniformly dispersed in water than the "(C-1) water-dispersible (thermal dissociative blocked) isocyanate compound that is an addition product of polyisocyanate having an aromatic ring and a blocking agent having one or more active hydrogen groups" by, for example, self-emulsification due to swelling of water.

Because the "(C-2) aqueous urethane compound having a (thermal dissociative blocked) isocyanate group" uniformly dispersed in water contains a hydrophobic organic isocyanate moiety in the compound molecule, stable associative micelles are formed between the hydrophobic parts of adjacent water-soluble urethanes as in the case of water-soluble urethane used in association-type thickeners, for example, thereby obtaining a three-dimensional network structure because of the hydrophobic interaction between aqueous urethanes uniformly dispersed in the liquid.

Next, the adhesive composition for organic fiber cords having a three-dimensional network structure by the hydrophobic bond is coated on an organic cord, and then dried and subjected to heat curing. Then, as illustrated in FIG. 3, the activated isocyanate groups 14 in which the blocking agent has been thermally dissociated form activated isocyanate crosslinks 23 by covalent bonds between the adjacent ones, thereby obtaining an adhesive layer containing a three-dimensional network structure of an aqueous urethane compound 13 having a (thermal dissociative blocked) isocyanate group. As a result, the adhesive composition for organic fiber cords in which the "(C) aqueous urethane compound having a (thermal dissociative blocked) isocyanate group" is "(C-2) an aqueous urethane compound having a (thermal dissociative blocked) isocyanate group" achieves more in

(3) good adhesion between an organic fiber cord and a coated rubber composition.

<(D) Epoxide compound>

The adhesive composition for organic fiber cords of the present disclosure contains

(A) synthetic rubber latex having unsaturated diene,
(B) gelatin, and
(C) an aqueous compound having a (thermal dissociative blocked) isocyanate group, and

contains no resorcin or formaldehyde.

It preferably further contains (D) an epoxide compound.

The "(D) epoxide compound" refers to a compound having oxacyclopropane (oxirane) (epoxy group), which is a three-membered ring ether, in its structural formula.

The "(D) epoxide compound" functions as a cross-linking agent component in the adhesive composition for organic fiber cords. That is, when the adhesive composition of the present disclosure further contains the "(D) epoxide compound", cross-linking is introduced between a hydroxyl group, an amine group or a thiol group contained in the amino acid unit in the "(B) gelatin", or an isocyanate group of the "(C) aqueous compound having a (thermal dissociative blocked) isocyanate group", the fracture resistance of the adhesive layer is improved, and the adhesiveness at high temperatures is significantly improved.

Further, it is preferable that the "(D) epoxide compound" have amine, alcohol, thiol, phenol and carboxylic acid, and that it be mixed with the "(C) aqueous compound having a (thermal dissociative blocked) isocyanate group" and heated. The reason is as follows. When the "(D) epoxide compound" is mixed with the "(C) aqueous compound having a (thermal dissociative blocked) isocyanate group" and heated, cross-linking caused by a nucleophilic reaction with the amine, alcohol, thiol, phenol and carboxylic acid of the "(D) epoxide compound", or the (thermal dissociative blocked) isocyanate or the like is added to the adhesive composition for organic fiber cords mainly composed of urethane bonds, thereby suppressing creep and flow due to stress in a high temperature region.

The epoxy group of the "(D) epoxide compound" is preferably polyfunctional. This is because in this case, the suppressing effect is improved, the destruction resistance of the adhesive layer of the adhesive composition for organic fiber cords is further improved, and the adhesiveness at high temperatures is also improved.
The "(D) epoxide compound" is preferably a compound containing two or more epoxy groups in one molecule. It is particularly preferably a compound containing four or more epoxy groups in one molecule. The reason is that the epoxy group is a polyfunctional group, the destructive resistance of the adhesive layer of the adhesive composition for organic fiber cords in the present disclosure is further increased as described above, and the adhesiveness at high temperatures is also increased.
Specific examples of the "(D) epoxide compound" include reaction products of epichlorohydrin and polyhydric alcohols such as diethylene glycol/diglycidyl ether, polyethylene/diglycidyl ether, polypropylene glycol/diglycidyl ether, neopentyl glycol/diglycidyl ether, 1,6-hexanediol/diglycidyl ether, glycerol/polyglycidyl ether, trimethylolpropane/polyglycidyl ether, polyglycerol/polyglycidyl ether, pentaerythiol/polyglycidyl ether, diglycerol/polyglycidyl ether, and sorbitol/polyglycidyl ether; novolak-type epoxy resin such as phenol novolak-type epoxy resin and cresol novolak-type epoxy resin; and bisphenol A-type epoxy resin. It is preferably a reaction product of polyhydric alcohols and epichlorohydrin, or a novolak-type epoxy resin.
Commercially-available chemicals may be used as the sorbitol/polyglycidyl ether, polyglycerol/polyglycidyl ether, and novolak-type epoxy resin.
The "(D) epoxide compound" can be used by being dissolved in water or dispersed in water by emulsification. For example, the "(D) epoxide compound" can be dissolved in water as it is. Alternatively, the "(D) epoxide compound" can be dissolved in a small amount of solvent as needed, and the solution can be emulsified into water using a known emulsifier (such as alkylbenzene sulfonic acid soda, dioctylsulfosuccinate sodium salt, and nonylphenol ethylene oxide adduct) to obtain an emulsified solution.
In one embodiment of the adhesive composition for organic fiber cords of the present disclosure, the content (parts by mass) of the "(D) epoxide compound" is not particularly limited. However, when the total parts by mass of the (A) synthetic rubber latex having unsaturated diene, the (B) gelatin, and the (C) aqueous compound having a (heat-dissociable blocked) isocyanate group is 100 parts by mass, it is preferably more than 0 parts by mass and 50 parts by mass or less, and more preferably more than 0.2 parts by mass and 30 parts by mass or less.

<Method of producing adhesive composition for organic fiber cords>

The adhesive composition for organic fiber cords of the present disclosure contains

(A) synthetic rubber latex having unsaturated diene,
(B) gelatin, and
(C) an aqueous compound having a (thermal dissociative blocked) isocyanate group. In producing the adhesive composition for organic fiber cords, the (A) synthetic rubber latex having unsaturated diene, the (B) gelatin, and the (C) aqueous compound having a (thermal dissociative blocked) isocyanate group can be mixed in any order.

The adhesive composition for organic fiber cords of the present disclosure is not particularly limited, and it can be produced by, for example, dissolving the "(B) gelatin" in warm water, then mixing it with the "(A) synthetic rubber latex having unsaturated diene" and cooling the mixture, and further mixing the mixture with the "(C) aqueous compound having a (thermal dissociative blocked) isocyanate group". Preferably, the adhesive composition for organic fiber cords can be produced by dissolving the "(B) gelatin" in warm water of 40 °C or higher and 80 °C or lower, then mixing it with the "(A) synthetic rubber latex having unsaturated diene" and cooling the mixture to a temperature of 15 °C or higher and 65 °C or lower, and further mixing the mixture with the "(C) aqueous compound having a (thermal dissociative blocked) isocyanate group"
The mixing of the "(A) synthetic rubber latex having unsaturated diene" and the "(B) gelatin" may be performed by mixing the "(B) gelatin" as an emulsifier or a post-additive with raw materials of the "(A) synthetic rubber latex having unsaturated diene" during the production of the "(A) synthetic rubber latex having unsaturated diene".
In the adhesive composition for organic fiber cords of the present disclosure, the mixed mass ratio of the "(A) synthetic rubber latex having unsaturated diene" and the "(B) gelatin" is not particularly limited. However, it is preferably in a range of 100: 0.1 to 100: 25 and more preferably in a range of 100: 0.2 to 100: 5 (including the value at both ends). The reason is as follows.
When the mixed mass ratio is 100: 0.1 (when the ratio value is 1000 or less), the "(A) synthetic rubber latex having unsaturated diene" serves as a core, a film of microcapsule of the "(B) gelatin" with sufficient thickness can be formed around the core, and an adhesive layer with sufficient strength can be obtained.
When the mixed mass ratio is 100: 25 (when the ratio value is 4 or more), the "(A) synthetic rubber latex having unsaturated diene" serves as a core, and a film of microcapsule of the "(B) gelatin" formed around the core is not too

thick. When a coated rubber composition, which is an adherend of an organic fiber cord, and the adhesive composition for organic fiber cords are co-vulcanized and adhered, the coated rubber composition as the adherend and the "(A) synthetic rubber latex having unsaturated diene" are well compatible with each other. As a result, an initial process of the adhesion between the coated rubber composition as an adherend and the adhesive composition for organic fiber cords proceeds favorably.

During the mixing of the "(A) synthetic rubber latex having unsaturated diene" and the "(B) gelatin", a known water-soluble material capable of strengthening the film of the "(B) gelatin" can be used in combination with ordinary coacervates. For example, electrolyte materials containing gum arabic, carrageenan, CMCs and organic or inorganic salts, such as salts with cations like sodium chloride, potassium chloride, magnesium chloride and ammonium chloride, and salts with anions like sulfates, phosphates, carbonates and acetates may be used.

Further, liquid substances that are water-soluble liquid and in which the film-forming material dissolves less than water, such as alcohols like ethanol and propanol, or water-soluble polymers such as isobutylene-maleic anhydride ring-opening copolymer salts may be used.

Alternatively, it is possible to mix a substance that crosslinks gelatin and insolubilizes it. For example, aldehydes such as glutaraldehyde, and transglutaminase enzyme may be used.

However, if gelatin is excessively crosslinked and insolubilized, when a coated rubber composition, which is an adherend of an organic fiber cord, and the adhesive composition for organic fiber cords are co-vulcanized and adhered, the fluidity of the gelatin film on the surface of rubber latex is decreased, and the compatibility between the coated rubber composition as the adherend and the "(A) synthetic rubber latex having unsaturated diene" is inhibited. As a result, the adhesiveness between the coated rubber composition as the adherend and the adhesive composition for organic fiber cords may decrease.

In the adhesive composition for organic fiber cords of the present disclosure, the mixed mass ratio of the "(A) synthetic rubber latex having unsaturated diene" and the "(C) aqueous compound having a (thermal dissociative blocked) isocyanate group" is not particularly limited. However, it is preferably in a range of 100: 5 to 100: 300, more preferably in a range of 100: 15 to 100: 150, and still more preferably in a range of 100: 20 to 100: 60 (including the value at both ends). The reason is as follows.

When the mixed mass ratio is 100: 5 (when the ratio value is 20 or less), the ratio of the "(A) synthetic rubber latex having unsaturated diene" in the adhesive composition for organic fiber cords is not too large, the destructive resistance of an adhesive layer of the adhesive composition for organic fiber cords can be sufficiently maintained, and deterioration of the adhesiveness under strain can be prevented.

Further, when the mixed mass ratio is 100: 300 (when the ratio value is 1/3 or more), the ratio of the "(A) synthetic rubber latex having unsaturated diene" in the adhesive composition for organic fiber cords is not too low, and the compatibility between a coated rubber composition, which is an adherend of an organic fiber cord, and the "(A) synthetic rubber latex having unsaturated diene" is improved when the coated rubber composition as the adherend and the adhesive composition for organic fiber cords are co-vulcanized and adhered. As a result, the adhesiveness between the coated rubber composition as the adherend and the adhesive composition for organic fiber cords is sufficiently high.

The adhesive composition for organic fiber cords of the present disclosure contains

(A) synthetic rubber latex having unsaturated diene,
(B) gelatin, and
(C) an aqueous compound having a (thermal dissociative blocked) isocyanate group, and it preferably further contains (D) an epoxide compound. In producing the adhesive composition for organic fiber cords, the (A) synthetic rubber latex having unsaturated diene, the (B) gelatin, the (C) aqueous compound having a (thermal dissociative blocked) isocyanate group, and the (D) epoxide compound can be mixed in any order.

However, when the "(D) epoxide compound" is mixed with water, the epoxy group reacts with water, and the function as a cross-linking agent tends to be gradually deactivated. Therefore, after mixing the "(D) epoxide compound" with water, it is preferable to subject the adhesive composition for organic fiber cords to coating treatment of an organic fiber cord as soon as possible. Specifically, it is more preferable to subject the adhesive composition for organic fiber cords to coating treatment of an organic fiber cord within 1 to 2 days after mixing the "(D) epoxide compound" with water.

The (A) synthetic rubber latex having unsaturated diene, the (B) gelatin, the (C) aqueous compound having a (thermal dissociative blocked) isocyanate group, and the (D) epoxide compound are preferably water-based. This is because water, which causes little damage to the environment, can be used as a solvent in this case.

<Organic fiber cord-rubber composite>

An organic fiber cord-rubber composite of the present disclosure will be described in detail with reference to FIG. 4.

FIG. 4 schematically illustrates a cross section of an example of the organic fiber cord-rubber composite of the present disclosure in an embodiment of the present disclosure. In an organic fiber cord-rubber composite 31, the outer surface in the outer diameter direction of an organic fiber cord 1 is coated with an adhesive layer 32 of an adhesive composition 2 for organic fiber cords of the present disclosure. The organic fiber cord 1 is further adhered to a coated rubber composition 33 located on the outer side in the outer diameter direction via the adhesive 32 of the adhesive composition 2 for organic fiber cords to form an organic fiber cord-rubber composite 31 of the present disclosure.

In addition to the organic fiber cord-rubber composite, a rubber reinforcing material using the adhesive composition for organic fiber cords of the present disclosure may be a film, a short fiber, a non-woven fabric, or the like.

<<Organic fiber cord of the organic fiber cord-rubber composite>>

The organic fiber cord of the organic fiber cord-rubber composite of the present disclosure is as described in the <Organic fiber cord> section.

<<Coated rubber composition of the organic fiber cord-rubber composite>>

On the other hand, the coated rubber composition of the organic fiber cord-rubber composite of the present disclosure preferably contains a rubber component blended with a compounding agent usually used in the rubber industry. The rubber component is not particularly limited, and examples thereof include natural rubber, conjugated diene-based synthetic rubber such as polyisoprene rubber (IR), polybutadiene rubber (BR), styrene-butadiene copolymer rubber (SBR), acrylonitrile butadiene rubber (NBR), chloroprene rubber (CR) and butyl rubber (IIR), and ethylene-propylene copolymer rubber (EPM), ethylene-propylene-diene copolymer rubber (EPDM), and polysiloxane rubber. Among the above, natural rubber and conjugated diene-based synthetic rubber are preferable. These rubber components may be used alone or in combination of two or more.

<<Method of producing organic fiber cord-rubber composite>>

The organic fiber cord-rubber composite of the present disclosure can be produced by coating an organic fiber cord with the adhesive composition for organic fiber cords of the present disclosure to form an adhesive layer, and co-vulcanizing and adhering the "(A) synthetic rubber latex having unsaturated diene" in the adhesive composition for organic fiber cords and the rubber component in the coated rubber composition which is an adherend of the organic fiber cord.

A method of coating the organic fiber cord with the adhesive composition for organic fiber cords of the present disclosure is not particularly limited. It may be a method of immersing the organic fiber cord in the adhesive composition for organic fiber cords, a method of applying the adhesive composition for organic fiber cords to the organic fiber cord with a brush, a method of spraying the adhesive composition for organic fiber cords onto the organic fiber cord, or the like, and an appropriate method may be used as needed.

When the organic fiber cord is coated with the adhesive composition for organic fiber cords, the adhesive composition for organic fiber cords is preferably dissolved in various solvents to reduce the viscosity, because the coating is facilitated in this case. It is environmentally preferable that the solvent for reducing the viscosity of the adhesive composition for organic fiber cords be mainly composed of water.

The thickness of an adhesive layer of the adhesive composition for organic fiber cords is not particularly limited, but it is preferably 50 μm or less and more preferably 0.5 μm or more and 30 μm or less.

When the amount of the adhesive composition adhered by adhesive treatment is increased, the adhesive durability under tire rolling tends to decrease. The reason is as follows. Due to the high rigidity of a fiber material, the adhesive composition at the interface of an adhered fiber material has relatively small deformation because the fiber material bears the stress due to strain. However, the deformation due to strain increases as the distance from the interface increases. Because the adhesive composition contains a large amount of thermosetting condensate as compared with the adhered rubber material, it is hard and brittle. As a result, the adhesive fatigue under repeated strain tends to increase. Therefore, the average thickness of the adhesive composition layer is preferably 50 μm or less. It is more preferably 0.5 μm or more and 30 μm or less.

The concentration of the adhesive composition for organic fiber cords impregnated in the organic fiber cord is not particularly limited. However, it is preferably 5.0 % by mass or more and 25.0 % by mass or less, and more preferably 7.5 % by mass or more and 20.0 % by mass or less with respect to the mass of the organic fiber cord (both are values in terms of solid content).

The organic fiber cord coated with the adhesive composition for organic fiber cords is preferably, for example, dried at a temperature of 100 °C or higher and 210 °C or lower, and then subjected to heat treatment at a temperature equal to or higher than the glass transition temperature of the polymer chain of the organic fiber cord (typically a temperature of the polymer chain [melting temperature: -70 °C] or higher and the [melting temperature: -10 °C] or lower).

The reason this case is preferable is as follows. When the temperature is equal to or higher than the glass transition temperature of the polymer chain of the organic fiber cord, the molecular mobility of the polymer chain of the organic fiber cord is good, and the adhesion promoter (the (C) aqueous compound having a (thermal dissociative blocked) isocyanate group) in the adhesive composition for organic fiber cords and the polymer chain of the organic fiber cord can sufficiently interact with each other. As a result, it is possible to obtain sufficient adhesiveness between the adhesive composition for organic fiber cords and the organic fiber cord.

The organic fiber cord may be pretreated by electron beam, microwave, corona discharge, plasma treatment, or the like.

In the organic fiber cord-rubber composite of the present disclosure, the resin material may be in any form such as a film, a cord, a cable, a filament, a filament tip, a cord fabric, and a canvas. Especially when the organic fiber cord-rubber composite is used for reinforcing a rubber article such as a tire article or a conveyor belt, a cord obtained by twisting a plurality of filaments is preferably used as the resin material. In such a cord, it is preferable that the synthetic fiber be obtained by second twisting and first twisting, where the twist constant of the first twist is preferably 1,300 to 2,500, and the twist constant of the second twist is preferably 900 to 1,800. In the present disclosure, it is preferably an organic fiber cord-rubber composite where the organic fiber cord is a polyethylene terephthalate tire cord having a twist structure of 1670 dtex/2, a second twist number of 40 times/10 cm, and a first twist number of 40 times/10 cm, and the adhesive composition for organic fiber cords is adhered to the tire cord with respect to the mass of the tire cord.

Finally, for the organic fiber cord coated with the adhesive composition for organic fiber cords, the (A) synthetic rubber latex having unsaturated diene in the adhesive composition for organic fiber cords and the rubber component in a coated rubber composition, which is an adherend of the organic fiber cord, are co-vulcanized and adhered.

In the co-vulcanization of the rubber component in the coated rubber composition, for example, sulfur, tylalium polysulfide compounds such as tetramethyltylalium disulfide and dipentamethylenetylalium tetrasulfide, organic vulcanizing agents such as 4,4-dithiomorpholin, p-quinone dioxime, p,p'-dibenzoquinone dioxime, cyclic sulfur imide, and the like may be used. Among the above, it is preferable to use sulfur. Further, various compounding agents such as a filler like carbon black, silica and aluminum hydroxide commonly used in the rubber industry, a vulcanization accelerator, an age resistor, and a softener may be appropriately added to the rubber component in the coated rubber composition.

Needless to say, the adhesive composition for organic fiber cords of the present disclosure can obtain an adhesive effect even in an adhesive method where a vulcanizing agent contained in an adherend of a synthetic resin material such as an organic fiber cord and/or an adherend of a coated rubber composition is transferred to the adhesive composition for organic fiber cords, and the transferred vulcanizing agent crosslinks the adhesive composition for organic fiber cords.

<Tire>

The tire of the present disclosure uses the organic fiber cord-rubber composite of the present disclosure.

The adhesive composition for organic fiber cords of the present disclosure and the organic fiber cord-rubber composite of the present disclosure can be applied to, in addition to the tire, all rubber articles such as a conveyor belt, a belt, a hose, and an air spring.

## EXAMPLES

The following describes the present disclosure in more detail with reference to examples, but the present disclosure is not limited to the following examples.

<Preparation of (A-1) vinyl pyridine-styrene-butadiene copolymer latex>

In the following comparative examples and examples, (A-1) vinylpyridine-styrene-butadiene copolymer latex was prepared in accordance with Comparative Example 1 described in JP H09-78045 A and used as the (A) synthetic rubber latex having unsaturated diene as follows.

In a nitrogen-substituted autoclave having a capacity of 5 liters, 130 parts by mass of deionized water and 4.0 parts by mass of potassium rosinate were charged and dissolved. A monomer mixture having a composition of 15 parts by mass of vinylpyridine monomer, 15 parts by mass of styrene and 70 parts by mass of butadiene, and 0.60 parts by mass of t-dodecyl mercaptan were added to this and emulsified. Next, the temperature was raised to 50 °C, 0.5 parts by mass of potassium persulfate was added, and polymerization was started. After the reaction rate of the monomer mixture reached 90 %, 0.1 parts by mass of hydroquinone was added to terminate the polymerization. Next, unreacted monomers were removed under reduced pressure to obtain (A-1) vinylpyridine-styrene-butadiene copolymer latex having a solid content concentration of 41 %.

<Preparation of (B-1) pig skin gelatin>

In the following comparative examples and examples, (B-1) pig skin gelatin was prepared and used as the (B) gelatin as follows.

First, 30 g of pig skin gelatin (high-grade gelatin M.W.8,000 ± 2,000, manufactured by FUJIFILM Wako Pure Chemical Corporation) with a gelation temperature of 23 °C to 30 °C was mixed with 270 g of deionized warm water in a 500 ml flask until completely dissolved to prepare a gelatin storage solution with a solid content concentration of 10 %, and then the solution was warmed and kept at 40 °C to obtain (B-1) pig skin gelatin.

<Preparation of (C-1) water-dispersible (thermal dissociative blocked) isocyanate compound that is an addition product of polyisocyanate having an aromatic ring and a blocking agent having one or more active hydrogen groups>

In the following comparative examples and examples, DM-6400 (blocking agent thermal dissociation temperature: about 130 °C, solid content concentration: 25 % by mass) manufactured by MEISEI CHEMICAL WORKS, LTD., which was (C-1-1) a block body of methylene diphenyl diisocyanate, was used as it was as the (C-1) water-dispersible (thermal dissociative blocked) isocyanate compound that is an addition product of polyisocyanate having an aromatic ring and a blocking agent having one or more active hydrogen groups of the (C) aqueous compound having a (thermal dissociative blocked) isocyanate group.

<Preparation of (C-2) aqueous urethane compound having a (thermal dissociative blocked) isocyanate group>

In the following comparative examples and examples, (C-2-1) a heat-reactive aqueous urethane resin was prepared according to the description of Example (6) of JP S58-49770 A as the (C-2) aqueous urethane compound having a (thermal dissociative blocked) isocyanate group of the (C) aqueous compound having a (thermal dissociative blocked) isocyanate group.

In a flask equipped with a stirrer, a reflux condenser, a nitrogen introduction tube, a thermometer and a dropping funnel, 100 parts by mass of polyphenylene polymethylene polyisocyanate (NCO content 31.5 % by mass) and 24.4 parts by mass of 2 mol adduct of ethylene oxide of bisphenol A (hydroxyl value = 35.4) was reacted at 85 °C for 30 minutes to obtain urethane prepolymer with 20.7 % by mass of free isocyanate. Next, 62.2 parts by mass of dioxane, 72 parts by mass of p-sec-butyl-phenol, and 0.25 parts by mass of triethylamine were added at 50 °C and then reacted at an internal temperature of 75 °C for 120 minutes to obtain partially blocked prepolymer with 4.2 % by mass of free isocyanate with respect to the total of polyphenylene polymethylene polyisocyanate and 2 mol adduct of ethylene oxide of bisphenol A. Next, 55 parts of a taurine soda aqueous solution with a concentration of 30 % by mass was added at an internal temperature of 40 °C and reacted at 40 °C to 45 °C for 30 minutes. Next, water dilution and removal of dioxane were performed so that the solid content was 31 %, and (C-2-1) a heat-reactive aqueous urethane resin was obtained.

Further, ELASTRON BN77 (blocking agent thermal dissociation temperature: about 160 °C, pH: 8.0, solid content concentration: 31 % by mass) manufactured by DKS Co. Ltd. was used as it was as (C-2-2) a heat-reactive aqueous urethane resin which was another (C-2) aqueous urethane compound having a (thermal dissociative blocked) isocyanate group of the (C) aqueous compound having a (thermal dissociative blocked) isocyanate group.

<Preparation of (D-1) sorbitol polyglycidyl ether>

In the following comparative examples and examples, DENACOL EX-614B (molecular weight: 949, epoxy equivalent: 173, solid content concentration: 100 % by mass) manufactured by Nagase ChemteX Corporation, which was (D-1) sorbitol polyglycidyl ether, was used as it was as the (D) epoxide compound.

<Preparation of adhesive composition for organic fiber cords of comparative examples and examples>

<<Preparation of RFL (resorcin-formaldehyde-latex) adhesive composition (Comparative Example 1)»

Each chemical was mixed with the composition listed in Table 1 below and aged at room temperature for 7 hours to obtain a resorcin-formaldehyde aging solution.

Table 1: Composition of resorcin-formaldehyde aging solution

Table 1

| | |
|---|---|
| Water | 588.29 parts by mass |
| Resorcin | 16.61 parts by mass |
| Formalin (37%) | 20.80 parts by mass |
| Caustic soda (10%) | 3.79 parts by mass |
| Total | 629.49 parts by mass |
| Resorcin: (R) resorcin<br>(Product name "RESORCINOL", melting point ≥ 108 °C, Sumitomo Chemical Co., Ltd.)<br>Formalin: (F) formaldehyde solution<br>(Special grade, purity: 36 % to 38 %, Kanto Chemical Co., Inc.)<br>Caustic soda: (N) sodium hydroxide<br>(Special grade, purity:> 97 %) | |

Subsequently, 370.51 parts by mass of the (A-1) vinylpyridine-styrene-butadiene copolymer latex was added to 629.49 parts by mass of the resorcin-formaldehyde aging solution, and then the mixture was aged at room temperature for 16 hours to obtain a conventional RFL (resorcin-formaldehyde-latex) adhesive composition having a solid content concentration of 18 % by mass (Comparative Example 1)

<<Preparation of latex adhesive composition (Comparative Example 2)»

The (A-1) vinyl pyridine-styrene-butadiene copolymer latex and water were mixed where the amount was adjusted so that the solid content concentration was 18 % by mass, and then the mixture was sufficiently stirred to obtain a latex adhesive composition (Comparative Example 2).

<<Preparation of latex-gelatin adhesive composition (Comparative Example 3)»

The (A-1) vinyl pyridine-styrene-butadiene copolymer latex and the (B-1) pig skin gelatin were blended as listed in Table 3 and mixed where the amount was adjusted with water so that the solid content concentration of the adhesive composition was 18 % by mass, and then the mixture was sufficiently stirred to obtain a latex-gelatin adhesive composition (Comparative Example 3).

<<Preparation of latex-aqueous urethane adhesive composition (Comparative Example 4)»

The (A-1) vinyl pyridine-styrene-butadiene copolymer latex and the (C-2-1) heat-reactive aqueous urethane resin were blended as listed in Table 3 and mixed where the amount was adjusted with water so that the solid content concentration of the adhesive composition was 18 % by mass, and then the mixture was sufficiently stirred to obtain a latex-aqueous urethane adhesive composition (Comparative Example 4).

<<Preparation of adhesive composition for organic fiber cords that is one embodiment of the present disclosure (Examples 1 to 5)>>

As listed in Table 3, each predetermined (A) synthetic rubber latex having unsaturated diene, (B) gelatin, (C) aqueous compound having a (thermal dissociative blocked) isocyanate group (Examples 1 to 5), and (D) epoxide compound (Example 3) were blended in the stated order and mixed where the amount was adjusted with water so that the solid content concentration of the adhesive composition was 18 % by mass, and then the mixture was sufficiently stirred to obtain an adhesive composition for organic fiber cords that is one embodiment of the present disclosure (Examples 1 to 5).

The (C-2-1) heat-reactive aqueous urethane resin was used in Examples 1 to 3, the (C-2-2) heat-reactive aqueous urethane resin was used in Example 4, and the (C-1-1) block body of methylene diphenyl isocyanate was used in Example 5, respectively, as the (C-2) aqueous urethane compound having a (thermal dissociative blocked) isocyanate group

During the mixing when preparing Comparative Example 3 and Examples 1 to 5, the (B) gelatin was added, and then the mixed solution was warmed and held at 40 °C to 70 °C for one minute or longer and one hour or shorter

and then gradually cooled to 20 °C.

<Coating of tire cord with each adhesive composition for organic fiber cords>

Tire cords made of polyethylene terephthalate having a twist structure of 1670 dtex/2, a second twist number of 40 times/10 cm and a first twist number of 40 times/10 cm were used as organic fiber cords.

The tire cords were immersed in each of the adhesive compositions for organic fiber cords of Comparative Examples 1 to 4 and Examples 1 to 5, where the concentration of the adhesive composition for organic fiber cords impregnated in the tire cord was adjusted to 3.8 % by mass with respect to the mass of the organic fiber cord. Next, they were subjected to drying in a drying zone (150 °C, 60 seconds), resin heat curing with tension applied (0.8 kg/piece) in a hot zone, and heat curing with the tension released in a normalizing zone (240 °C, 60 seconds) to obtain tire cords coated with each of the adhesive compositions for organic fiber cords of Comparative Examples 1 to 4 and Examples 1 to 5.

<Formation of tire cord-rubber composite>

The tire cords coated with each of the adhesive compositions for organic fiber cords of Comparative Examples 1 to 4 and Examples 1 to 5 were embedded in the unvulcanized compounded rubber compositions listed in Table 2 below, and co-vulcanization was performed at 155 °C for 20 minutes.

A rubber composition containing natural rubber, styrene-butadiene rubber, carbon black, vulcanizing chemicals and the like was used as the coated rubber component.

<Evaluation of operability of adhesive composition for organic fiber cords>

The operability of each of the adhesive compositions for organic fiber cords of Comparative Examples 1 to 4 and Examples 1 to 5 was evaluated as follows.

«Evaluation of mechanical stability (solidification rate)»

The mechanical stability (solidification rate) of each of the adhesive compositions for organic fiber cords of Comparative Examples 1 to 4 and Examples 1 to 5 was determined with a method using a Maron mechanical stability tester for copolymer latex composition described in JIS K 6392-1995 (Maron stability tester No.2312-II, manufactured by KUMAGAI RIKI KOGYO Co., Ltd.).

In brief, each of the adhesive compositions for organic fiber cords of Comparative Examples 1 to 4 and Examples 1 to 5 was subjected to shear strain for 10 minutes at a compression load of 10 Kg and a rotation speed of 1000 r/min using the rotor of the Maron mechanical stability tester, and then the solidification rate% was evaluated by the following formula with the amount of formed solid products.

$$\text{Solidification rate \%} = (\text{dry mass of formed solid product})/(\text{solid content mass of adhesive liquid under test}) \times 100$$

«Evaluation of adhesion to drawing roller»

The polyethylene terephthalate tire cord, which was an organic fiber cord, was continuously treated for 2000 m in a dipping treatment machine for storing each of the adhesive composition for organic fiber cords of Comparative Examples 1 to 4 and Examples 1 to 5. The amount of each of the adhesive composition for organic fiber cords of Comparative Examples 1 to 4 and Examples 1 to 5 adhered to the drawing roller was visually observed and evaluated in the following five stages.

Extra-large: a very large amount
Large: a large amount
Medium: a medium amount
Small: a small amount
Little: a very small amount.

<Evaluation of adhesive property of adhesive composition for organic fiber cords>

The adhesive properties of each of the adhesive compositions for organic fiber cords of Comparative Examples

1 to 4 and Examples 1 to 5 were evaluated as follows.

«Evaluation of adhesiveness»

By pulling the tire cord-rubber composites obtained by using each of the adhesive compositions for organic fiber cords of Comparative Examples 1 to 4 and Examples 1 to 5 at a rate of 300 mm/min, the tire cord was peeled off from the tire cord-rubber composite, and the peeling resistance per tire cord was determined and used as the adhesiveness (N/piece).

«Evaluation of adhesion state of coated rubber»

For the tire cord peeled off from the tire cord-rubber composite, the adhesion state of the coated rubber was visually observed and scored according to Table 2 below.

Table 2: Table of score of adhesion state of coated rubber

Table 2

| Score of adhesion state of coated rubber | Adhesion area ratio of coated rubber to tire cord (organic fiber cord) | State of cord filament |
|---|---|---|
| A+ | - | Filament is broken |
| A | 80% or more and 100% or less | Filament is not broken |
| B | 60% or more and less than 80% | Filament is not broken |
| C | 40% or more and less than 60% | Filament is not broken |
| D | 20% or more and less than 40% | Filament is not broken |
| E | 0% or more and less than 20% | Filament is not broken |

<Results of operability evaluation and adhesive property evaluation of adhesive composition for organic fiber cords>

Table 3 below lists the compositions of the adhesive compositions for organic fiber cords of Comparative Examples 1 to 4 and Examples 1 to 5, and the results of operability evaluation and adhesive property evaluation thereof. Table 3: Compositions of adhesive composition for organic fiber cords of Comparative Examples 1 to 4 and Examples 1 to 5, and operability evaluation and adhesive property evaluation results thereof

Table 3

| | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|
| Compositions of adhesive composition for organic fiber cords | (A) Synthetic rubber latex having unsaturated diene | A-1 | A-1 | A-1 | A-1 | A-1 | A-1 | A-1 | A-1 | A-1 |
| | | 8602 | 100.00 | 95.90 | 73.00 | 70.00 | 4000 | 6000 | 70.00 | 7000 |
| | (B) Gelatin | - | - | B-1 | - | B-1 | B-1 | B-1 | B-1 | B-1 |
| | | | | 4.10 | | 3.00 | 3.00 | 1.50 | 300 | 3.00 |
| | (C) Aqueous compound having a (thermal dissociative blocked) isocyanate group | - | - | | C-2-1 | C-2-1 | C-2-1 | C-2-1 | C-2-2 | C-1-1 |
| | | | | | 2700 | 2700 | 57.00 | 22.00 | 2700 | 27.00 |
| | (D) Epoxide compound | - | - | - | - | - | - | D-1 | - | - |
| | | | | | | | | 16.5 | | |
| | Resorcin | R | - | - | - | - | - | - | - | - |
| | | | | | | | | | | |
| | Formaldehyde | F | - | - | - | - | - | - | - | - |
| | | 4.36 | | | | | | | | |
| | Caustic soda | N | - | - | - | - | - | - | - | - |
| | | 0.22 | | | | | | | | |
| | Adhesive liquid under test Solid content concentration | 18% | 18% | 18% | 18% | 18% | 18% | 18% | 18% | 18% |

(continued)

| | | Comparative Example 1 | Comparative Example 2 | Comparative Example 3 | Comparative Example 4 | Example 1 | Example 2 | Example 3 | Example 4 | Example 5 |
|---|---|---|---|---|---|---|---|---|---|---|
| Evaluation results | Mechanical stability (solidification rate) | 1.1% | 4.1% | 1.62% | 2.7% | 0.18% | 0.28% | 0.44% | 0.37% | 0.71% |
| | Adhesion to drawing roller | Small | Extra-large | Medium | Large | Little | Little | Small | Small | Medium |
| | Adhesiveness (N/piece) | 4.6 | 2.9 | 3.1 | 5.3 | 16.8 | 18 | 18.2 | 17.9 | 7.2 |
| | Adhesion state of coated rubber | E | E | E | D | B | A | A+ | A | C |

<Each column of adhesive composition for organic fiber cords>

A-1: (A-1) vinyl pyridine-styrene-butadiene copolymer latex
B-1: (B-1) pig skin gelatin
C-1-1: (C-1-1) block body of methylene diphenyl diisocyanate
C-2-1: (C-2-1) heat-reactive aqueous urethane resin
C-2-2: (C-2-2) heat-reactive aqueous urethane resin
D-1: (D-1) sorbitol polyglycidyl ether
R: (R) resorcin
F: (F) formaldehyde liquid
N: (N) sodium hydroxide
-: the component is not added.

Each numerical value: the dry mass part of the component.

The conventional RFL adhesive composition for organic fiber cords containing resorcin and formaldehyde (Comparative Example 1) was relatively good in terms of mechanical stability (solidification rate) and operability expressed by the adhesion to a drawing roller, but it was insufficient in terms of adhesiveness and adhesive properties represented by the adhesion state of the coated rubber.

On the other hand, the adhesive composition for organic fiber cords containing no resorcin or formaldehyde (Comparative Examples 2, 3 and 4), which was intended to lower the burden on the environment, was insufficient in terms of mechanical stability (solidification rate) and operability expressed by the adhesion to a drawing roller, and it was insufficient in terms of adhesiveness and adhesive properties represented by the adhesion state of the coated rubber.

In contrast to these, Examples 1 to 5, which were some embodiments of the adhesive composition for organic fiber cords of the present disclosure and which do not contain resorcin or formaldehyde, were good in both terms of mechanical stability (solidification rate) and operability expressed by the adhesion to a drawing roller, and adhesiveness and adhesive properties represented by the adhesion state of the coated rubber.

It should be noted that the adhesive composition for organic fiber cords containing both the (B-1) pig skin gelatin and the (C-2-1) heat-reactive aqueous urethane resin (Examples 1 and 2) was synergistically significantly improved in both terms of mechanical stability (solidification rate) and operability expressed by the adhesion to a drawing roller, and adhesiveness and adhesive properties represented by the adhesion state of the coated rubber, as compared with any of the adhesive composition for organic fiber cords containing the (B-1) pig skin gelatin but no (C-2-1) heat-reactive aqueous urethane resin (Comparative Example 3) and the adhesive composition for organic fiber cords containing no (B-1) pig skin gelatin but containing the (C-2-1) heat-reactive aqueous urethane resin (Comparative Example 4).

These synergistic improvement effects, including partial improvement effects, could be found in cases using any of the (C-2-2) heat-reactive aqueous urethane resin (Example 4) and the (C-1-1) block body of methylene diphenyl diisocyanate (Examples 5).

Further, in the adhesive composition for organic fiber cords containing the (D-1) sorbitol polyglycidyl ether (Example 3), the adhesiveness and the adhesive properties represented by the adhesion state of the coated rubber were further improved (Examples 1, 2 v.s. 3)

INDUSTRIAL APPLICABILITY

The present disclosure provides an adhesive composition for organic fiber cords having the following effects

(1) causing little damage to the environment by using no resorcin or formaldehyde,
(2) in a process of coating an organic fiber cord with the adhesive composition for organic fiber cords and drying and heat curing, it is possible to suppress the adhesion of the adhesive composition for organic fiber cords to a roller or the like by suppressing the adhesiveness of rubber latex, which is measured as the mechanical stability of the adhesive liquid under shear strain, thereby achieving good operability, and
(3) achieving good adhesion between an organic fiber cord and a coated rubber composition.

The present disclosure also provides an organic fiber cord-rubber composite using an organic fiber cord coated with the adhesive composition for organic fiber cords, and a tire using the organic fiber cord-rubber composite. Therefore, the present disclosure can be used in the industrial fields of manufacturing rubber articles such as tires.

REFERENCE SIGNS LIST

1 organic fiber cord
2 adhesive composition for organic fiber cords
3 dipping bath (dipping tank)
4 organic fiber cord coated with the adhesive composition 2 for organic fiber cords
5 drawing roller
6 drying zone
7 hot zone
8 normalizing zone
11 synthetic rubber latex having unsaturated diene
12 gelatin
13 aqueous urethane compound having a (thermal dissociative blocked) isocyanate group
14 activated isocyanate group
15 part that easily diffuses into organic fiber cord 1
16 part that is difficult to diffuse into organic fiber cord 1
20 latex-gelatin protective film effect
21 rubber co-vulcanized adhesive
22 gelatin-isocyanate crosslink
23 activated isocyanate crosslink
24 aqueous urethane-organic fiber cord interface effect
31 organic fiber cord-rubber composite
32 adhesive layer of adhesive composition 2 for organic fiber cords
33 coated rubber composition
40 water-dispersible (thermal dissociative blocked) isocyanate compound that is an addition product of polyisocyanate having an aromatic ring and a blocking agent having one or more active hydrogen groups
41 aromatic isocyanate-organic fiber cord diffusion effect

## Claims

**1.** An adhesive composition for organic fiber cords, comprising

(A) synthetic rubber latex having unsaturated diene,
(B) gelatin, and
(C) an aqueous compound having a (thermal dissociative blocked) isocyanate group, wherein

the adhesive composition for organic fiber cords contains no resorcin or formaldehyde.

**2.** The adhesive composition for organic fiber cords according to claim 1, further comprising (D) an epoxide compound.

**3.** The adhesive composition for organic fiber cords according to claim 1 or 2, wherein

the (C) aqueous compound having a (thermal dissociative blocked) isocyanate group is
(C-1) a water-dispersible (thermal dissociative blocked) isocyanate compound that is an addition product of polyisocyanate having an aromatic ring and a blocking agent having one or more active hydrogen groups.

**4.** The adhesive composition for organic fiber cords according to claim 1 or 2, wherein

the (C) aqueous compound having a (thermal dissociative blocked) isocyanate group is
(C-2) an aqueous urethane compound having a (thermal dissociative blocked) isocyanate group.

**5.** The adhesive composition for organic fiber cords according to claim 3, wherein the (C-1) water-dispersible (thermal dissociative blocked) isocyanate compound that is an addition product of polyisocyanate having an aromatic ring and a blocking agent having one or more active hydrogen groups is a block body of methylene diphenyl diisocyanate.

6. The adhesive composition for organic fiber cords according to claim 4, wherein the (C-2) aqueous urethane compound having a (thermal dissociative blocked) isocyanate group is a reaction product obtained by mixing (α), (β), (γ) and (δ) and reacting them, wherein

   (α) is an organic polyisocyanate compound having 3 or more and 5 or less functional groups and having a number average molecular weight of 2,000 or less,
   (β) is a compound having 2 or more and 4 or less active hydrogen groups and a number average molecular weight of 5,000 or less,
   (γ) is a thermal dissociative blocking agent, and
   (δ) is a compound having at least one active hydrogen group and at least one anionic, cationic, or nonionic hydrophilic group, and
   (α), (β), (γ) and (δ) are mixed so that
   the mixing ratio of (α) is 40 % by mass or more and 85 % by mass or less,
   the mixing ratio of (β) is 5 % by mass or more and 35 % by mass or less,
   the mixing ratio of (γ) is 5 % by mass or more and 35 % by mass or less, and
   the mixing ratio of (δ) is 5 % by mass or more and 35 % by mass or less

   with respect to the total amount of (α), (β), (γ) and (δ), and
   when the molecular weight of an isocyanate group (-NCO) is 42, the composition ratio of a (thermal dissociative blocked) isocyanate group in the reaction product is 0.5 % by mass or more and 11 % by mass or less.

7. The adhesive composition for organic fiber cords according to claim 4, wherein the (C-2) aqueous urethane compound having a (thermal dissociative blocked) isocyanate group is represented by the following general formula (I),

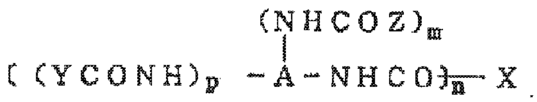

(I)

   where

   A is a residue of an organic polyisocyanate compound from which an active hydrogen group has been eliminated,
   X is a residue of a polyol compound having 2 or more and 4 or less hydroxyl groups and having a number average molecular weight of 5,000 or less from which an active hydrogen group has been eliminated,
   Y is a residue of a thermal dissociative blocking agent from which an active hydrogen group has been eliminated,
   Z is a residue of a compound having at least one active hydrogen group and a group that produces at least one salt or a hydrophilic polyether chain, from which an active hydrogen group has been eliminated,
   n is an integer of 2 or more and 4 or less, and
   p + m is an integer of 2 or more and 4 or less where $m \geq 0.25$.

8. The adhesive composition for organic fiber cords according to any one of claims 2 to 7, wherein the (D) epoxide compound has two or more epoxy groups in one molecule.

9. The adhesive composition for organic fiber cords according to any one of claims 2 to 8, wherein the (D) epoxide compound is a reaction product of polyhydric alcohols and epichlorohydrin.

10. An organic fiber cord-rubber composite using an organic fiber cord coated with the adhesive composition for organic fiber cords according to any one of claims 1 to 9.

11. A tire using the organic fiber cord-rubber composite according to claim 10.

FIG. 1

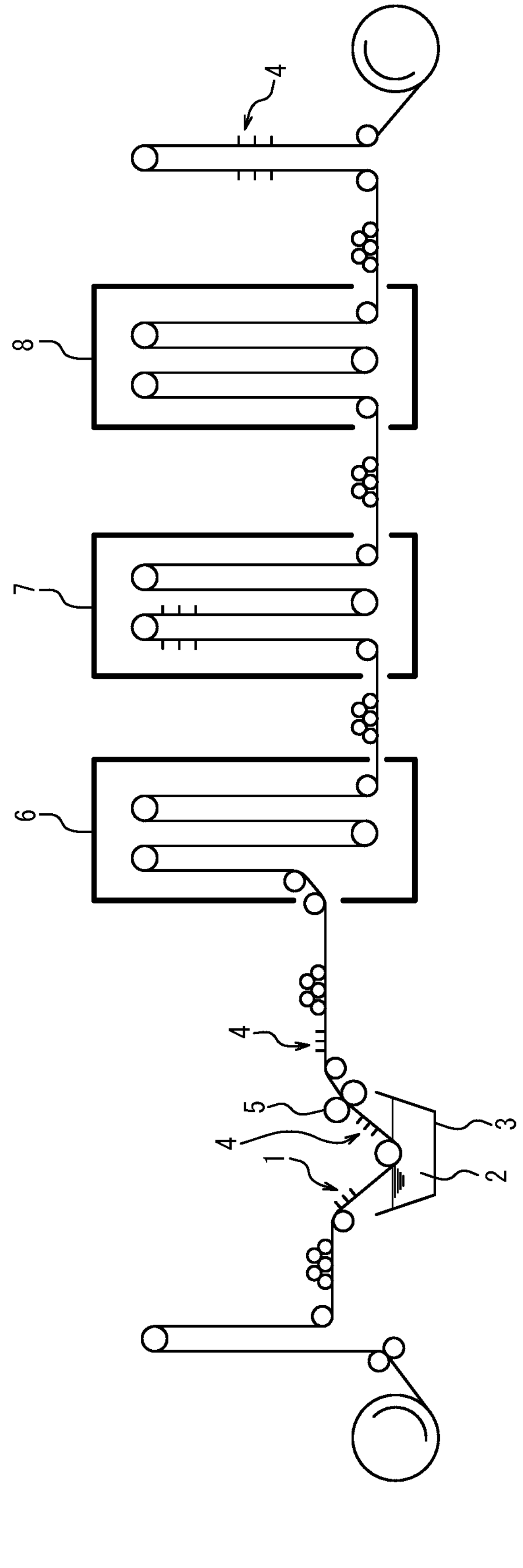

FIG. 2

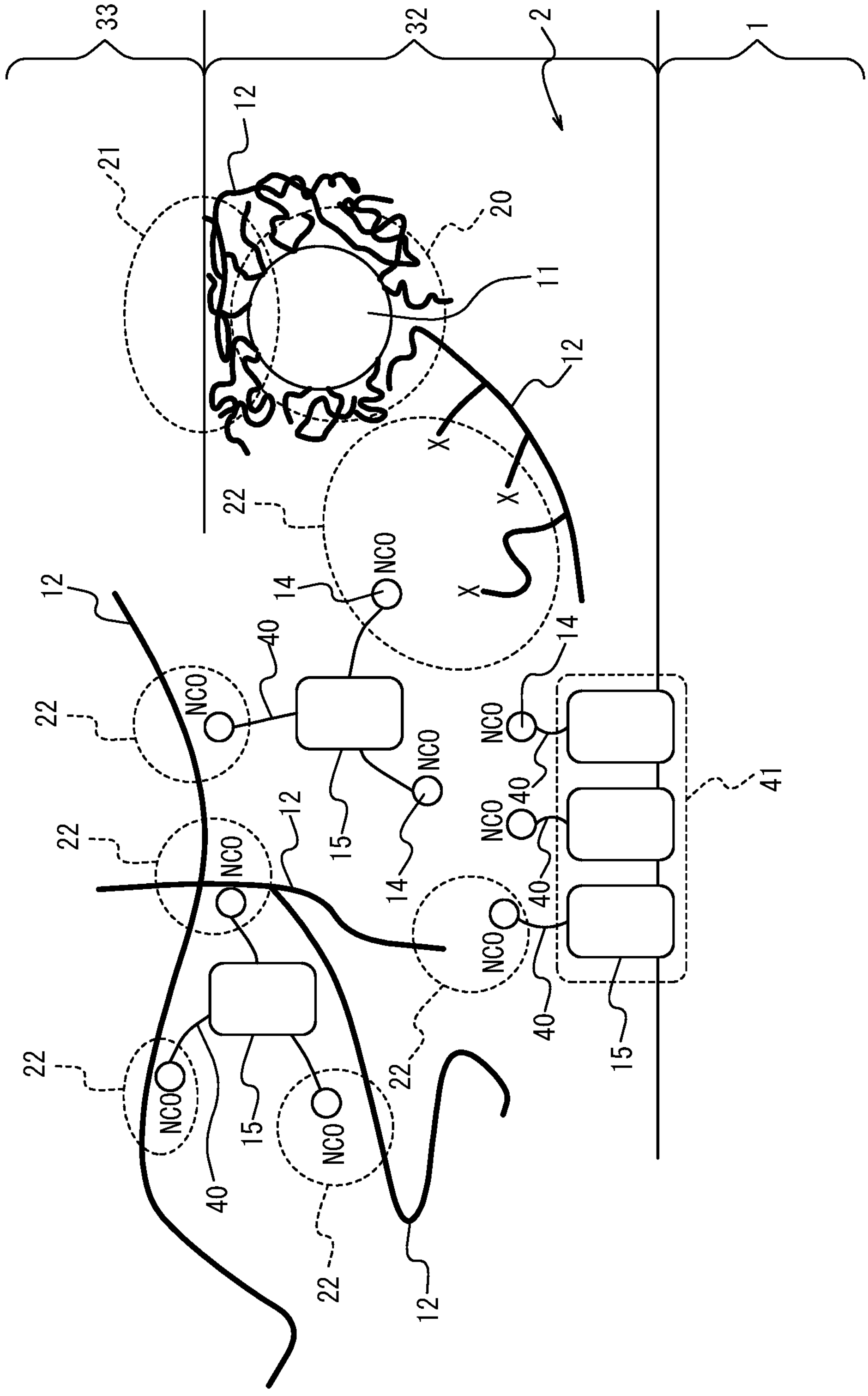

FIG. 3

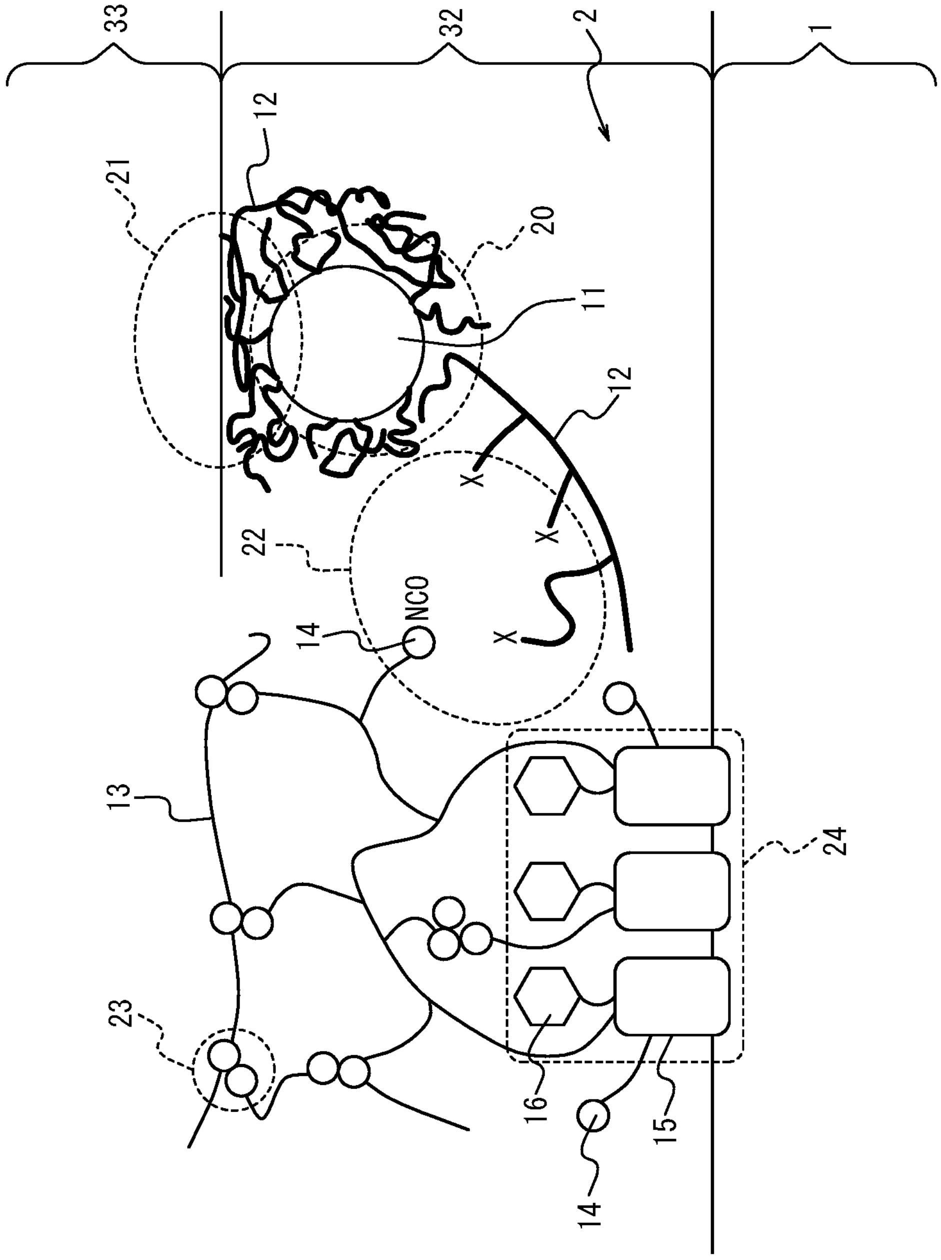

FIG. 4

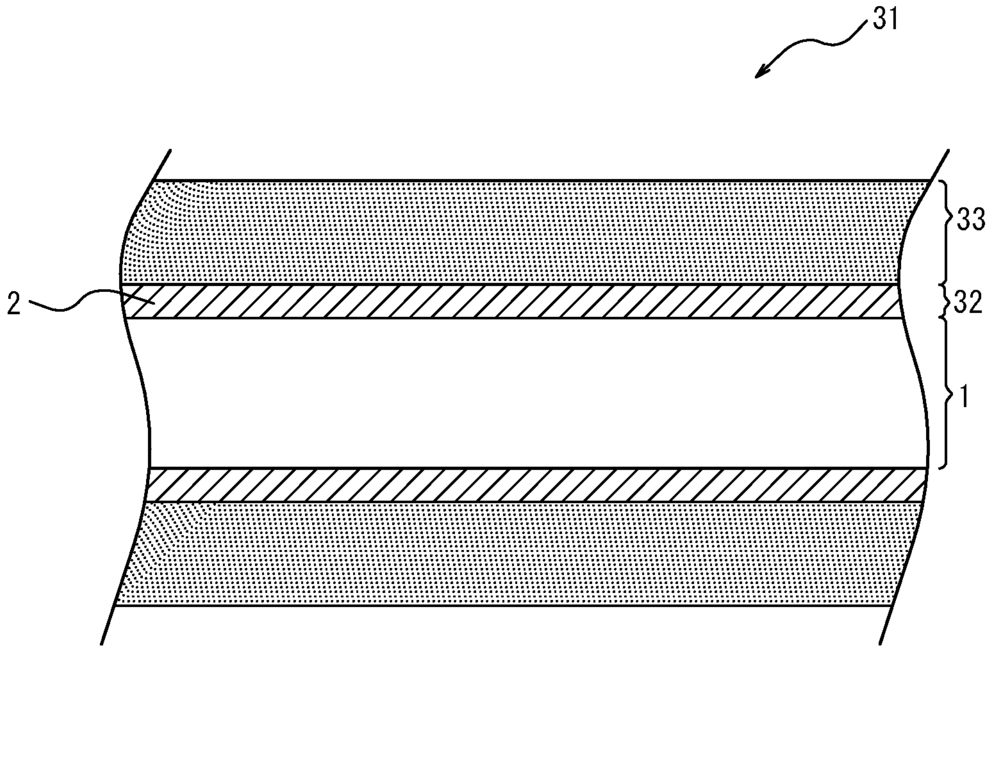

## INTERNATIONAL SEARCH REPORT

International application No.
PCT/JP2021/016534

A. CLASSIFICATION OF SUBJECT MATTER
D06M 15/693(2006.01)i; B60C 9/00(2006.01)i; C09J 11/06(2006.01)i; C09J 11/08(2006.01)i; C09J 109/00(2006.01)i; C09J 175/04(2006.01)i; D06M 13/11(2006.01)i; D06M 13/395(2006.01)i; D06M 15/15(2006.01)i
FI: D06M15/693; B60C9/00 A; C09J11/06; C09J11/08; C09J109/00; C09J175/04; D06M13/11; D06M13/395; D06M15/15
According to International Patent Classification (IPC) or to both national classification and IPC

B. FIELDS SEARCHED
Minimum documentation searched (classification system followed by classification symbols)
D06M13/00-15/715; B60C1/00-19/12; C08K3/00-13/08;C08L1/00-101/14; C09J1/00-5/10; 9/00-201/10; D07B1/00-9/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 58-49770 A (DKS CO., LTD.) 24 March 1983 (1983-03-24) claims, page 6, upper right column, lines 3-20, lower left column, lines 8-20 | 1-2, 4, 7-11<br>3, 5-6 |
| Y | JP 53-121885 A (THE YOKOHAMA RUBBER CO., LTD.) 24 October 1978 (1978-10-24) claims, page 2, lower left column, line 11 to page 3, upper left column, line 20 | 1-11 |
| Y<br>A | JP 2013-64037 A (BRIDGESTONE CORPORATION) 11 April 2013 (2013-04-11) claims | 1-2, 4, 6-11<br>3, 5 |
| Y<br>A | JP 2000-248254 A (BRIDGESTONE CORPORATION) 12 September 2000 (2000-09-12) claims | 6-11<br>1-5 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 June 2021 (28.06.2021) | 13 July 2021 (13.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

**INTERNATIONAL SEARCH REPORT**

International application No.
PCT/JP2021/016534

C (Continuation). DOCUMENTS CONSIDERED TO BE RELEVANT

| Category* | Citation of document, with indication, where appropriate, of the relevant passages | Relevant to claim No. |
|---|---|---|
| Y | US 2017/0130396 A1 (KORDSA GLOBAL ENDUSTRIYEL IPLIK VE KORD BEZI SANAYI VE TICARET A. S.) 11 May 2017 (2017-05-11) claims, paragraphs [0004], [0046], examples | 1-11 |
| Y<br>A | JP 2001-98245 A (BRIDGESTONE CORPORATION) 10 April 2001 (2001-04-10) claims, paragraph [0168] | 8-11<br>1-7 |

**INTERNATIONAL SEARCH REPORT**
Information on patent family members

International application No.
PCT/JP2021/016534

| Patent Documents referred in the Report | Publication Date | Patent Family | Publication Date |
|---|---|---|---|
| JP 58-49770 A | 24 Mar. 1983 | US 4433017 A<br>claims, page 3, right column, lines 22-58 | |
| JP 53-121885 A | 24 Oct. 1978 | (Family: none) | |
| JP 2013-64037 A | 11 Apr. 2013 | (Family: none) | |
| JP 2000-248254 A | 12 Sep. 2000 | US 6774172 B1<br>claims<br>WO 2000/039237 A1<br>EP 1059346 A1 | |
| US 2017/0130396 A1 | 11 May 2017 | WO 2015/188939 A1<br>EP 2955268 A1<br>CN 106460313 A<br>KR 10-2017-0013892 A | |
| JP 2001-98245 A | 10 Apr. 2001 | US 6774172 B1<br>claims, etc.<br>WO 2000/039237 A1<br>EP 1059346 A1 | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2126229 B
- JP 2005263887 A
- JP 2006037251 A
- JP H0912997 A
- WO 9713818 A1
- JP 2011241402 A
- WO 2010125992 A1
- JP 2013064037 A
- JP H0978045 A
- JP S6351474 A
- JP S5849770 A

### Non-patent literature cited in the description

- **KOICHI HAKATA.** *Network Polymer,* 2010, vol. 31 (5), 252